(19) Europäisches Patentamt
European Patent Office
Office européen des brevets

(11) **EP 2 981 832 B1**

(12) **EUROPÄISCHE PATENTSCHRIFT**

(45) Veröffentlichungstag und Bekanntmachung des Hinweises auf die Patenterteilung:
**28.06.2017 Patentblatt 2017/26**

(21) Anmeldenummer: **14728858.3**

(22) Anmeldetag: **26.05.2014**

(51) Int Cl.:
*G01P 7/00* (2006.01)    *G01P 21/02* (2006.01)
*B60T 8/17* (2006.01)    *B60T 13/66* (2006.01)
*B60T 8/172* (2006.01)

(86) Internationale Anmeldenummer:
**PCT/EP2014/060772**

(87) Internationale Veröffentlichungsnummer:
**WO 2014/195162 (11.12.2014 Gazette 2014/50)**

(54) **VERFAHREN ZUR ERMITTLUNG ZUMINDEST EINER GESCHWINDIGKEIT BEI EINEM SCHIENENFAHRZEUG**

METHOD FOR DETERMINING AT LEAST ONE SPEED IN A RAIL VEHICLE

PROCÉDÉ DE DÉTERMINATION D'AU MOINS UNE VITESSE D'UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2013 DE 102013210361**

(43) Veröffentlichungstag der Anmeldung:
**10.02.2016 Patentblatt 2016/06**

(73) Patentinhaber: **Siemens Aktiengesellschaft 80333 München (DE)**

(72) Erfinder:
• **HASSLER, Stefan**
 **91281 Kirchenthumbach (DE)**
• **STÜTZLE, Thorsten**
 **90480 Nürnberg (DE)**
• **FÖRSTER, Till**
 **90763 Fürth (DE)**

(56) Entgegenhaltungen:
**EP-A2- 0 280 524    WO-A1-2008/071498
DE-A1-102010 045 720    US-B1- 6 600 979**

EP 2 981 832 B1

**Beschreibung**

Die Erfindung betrifft ein Verfahren zur Ermittlung zumindest einer Geschwindigkeit bei einem Schienenfahrzeug, welches mit zumindest einer ersten Fahrwerkeinheit ausgestattet ist, bei welchem wenigstens eine auf die erste Fahrwerkeinheit bezogene Fahrwerkgeschwindigkeitsmessgröße mittels zumindest einer der ersten Fahrwerkeinheit zugeordneten Sensoreinheit bereitgestellt wird.

Bei einer Vielzahl von Anwendungen in Schienenfahrzeugen wird die Fahrzeugfahrgeschwindigkeit herangezogen. Ein typisches Beispiel ist ein Bremsvorgang, der auf die momentane Fahrgeschwindigkeit abgestimmt ist. Heutzutage besteht das Bremssystem vermehrt zumindest aus einer elektrodynamischen Bremse und einer pneumatischen, mit Gleit- und Schleuderschutz ausgestatteten Bremse. Zukünftige Bremssysteme sollen vorzugsweise nur aus einer elektrodynamischen Bremse und einer anderweitigen Bremseinrichtung, insbesondere einer Federspeicherbremse bestehen, wobei auf den Einsatz einer vollwertigen, hinsichtlich der Kosten und des Bauraums aufwendigen pneumatischen Bremse verzichtet wird.

Um die Anforderungen, die für eine sichere Schnell- und Notbremsung von derartigen Systemen vorgeschrieben sind, zu erfüllen sind für die Regelung einer von zumindest einem Fahrwerkmotor gebildeten elektrodynamischen Bremse Redundanzebenen vorgesehen, wobei einem Wechseln zwischen Redundanzebenen und ggf. einem Aktivieren der anderweitigen Bremseinrichtung, wie z.B. einer Federspeicherbremse von Fahrwerken eine möglichst exakte und als sicher geltende Geschwindigkeitserfassung liegen muss. Außerdem liegt eine genaue Geschwindigkeitsbestimmung der Ausführung einer zuverlässigen Gleit- und Schleuderschutzfunktion zugrunde.

Es ist bekannt, die Geschwindigkeit einer als Drehgestell ausgebildeten Fahrwerkeinheit mittels eines Drehzahlgebers an einem Drehgestellmotor bzw. an der von diesem angetriebenen Radachse zu bestimmen. In manchen betrieblichen Situationen, wie insbesondere bei einem Schlüpfen bzw. Gleiten oder Schleudern der Radachse weicht die auf der Grundlage der Radgeschwindigkeiten erfasste Drehgestellgeschwindigkeit von der Fahrgeschwindigkeit des Schienenfahrzeugs bzw. der weiteren Drehgestelle ab. Dies kann die Ausführung einer Gleit- und Schleuderschutzfunktion nachteilhaft beeinträchtigen. Außerdem kann ein Wechseln der Redundanzebenen, die für die Regelung eines als elektrodynamische Bremse dienenden Drehgestellmotors vorgesehen sind, bzw. die Aktivierung einer anderweitigen Bremseinrichtung des Drehgestells erschwert bzw. fehlerhaft sein.

Aus dem Dokument WO 2008/071498 ist ein Verfahren zur Ermittlung eines aktualisierten Radumfangs eines an einem Fahrzeug angeordneten Rades bekannt, bei dem in einer Steuereinheit dem Rad zumindest ein Radumfang zugeordnet ist und bei dem abhängig von der Rotationsgeschwindigkeit des Rades und abhängig von dem zugeordneten Radumfang mittels der Steuereinheit die Radgeschwindigkeit ermittelt wird. Weiterhin wird eine von der ermittelten Radgeschwindigkeit unabhängige Referenzgeschwindigkeit des Fahrzeuges und/oder des Rades ermittelt, die Abweichung der zumindest einen Radgeschwindigkeit von der Referenzgeschwindigkeit bestimmt und abhängig von der Abweichung der aktualisierte Radumfang des Rades ermittelt.

Der Erfindung liegt die Aufgabe zugrunde, ein Verfahren zur Ermittlung zumindest einer Geschwindigkeit bei einem Schienenfahrzeug bereitzustellen, durch welche eine besonders zuverlässige, insbesondere als sicher geltende Ermittlung erreicht werden kann.

Erfindungsgemäß wird ein Verfahren zur Ermittlung zumindest einer Geschwindigkeit bei einem Schienenfahrzeug, welches mit zumindest einer ersten Fahrwerkeinheit ausgestattet ist, vorgeschlagen, bei welchem wenigstens eine auf die erste Fahrwerkeinheit bezogene Fahrwerkgeschwindigkeitsmessgröße mittels zumindest einer der ersten Fahrwerkeinheit zugeordneten Sensoreinheit bereitgestellt wird. Gekennzeichnet ist das erfindungsgemäße Verfahren dadurch, dass eine Referenzgeschwindigkeitskenngröße auf der Basis der Fahrwerkgeschwindigkeitsmessgröße gebildet wird, Inertialmessgrößen von einer Inertialmesseinheit erfasst werden, gemäß einem ersten Betriebsmodus eine Inertialgeschwindigkeitskenngröße mittels einer Inertialberechnung zumindest auf der Basis der Inertialmessgrößen und der Referenzgeschwindigkeitskenngröße zur Schätzung einer Abweichung in der Inertialberechnung ermittelt und mit Hilfe dieser Abweichung korrigiert wird, wobei die Inertialberechnung von zumindest einer Recheneinheit durchgeführt wird, gemäß einem zweiten Betriebsmodus die Inertialgeschwindigkeitskenngröße mittels der Inertialberechnung zumindest auf der Basis der Inertialmessgrößen und ohne Berücksichtigung der Referenzgeschwindigkeitskenngröße ermittelt wird, auf der Grundlage eines Vergleichs der im ersten Betriebsmodus ermittelten Inertialgeschwindigkeitskenngröße und der Fahrwerkgeschwindigkeitsmessgröße ein anomaler Bereitstellungsvorgang der Fahrwerkgeschwindigkeitsmessgröße durch eine Erkennungseinheit erfasst wird, und beim Vorliegen eines anomalen Bereitstellungsvorgangs die Inertialberechnung gemäß dem zweiten Betriebsmodus durchgeführt wird.

Dadurch kann der Einfluss eines anomalen Bereitstellungsvorgangs der Fahrwerkgeschwindigkeitsmessgröße auf die Ermittlung einer Geschwindigkeit des Schienenfahrzeugs wesentlich reduziert, insbesondere vermieden werden. Dies kann insbesondere dadurch erreicht werden, dass die Fahrwerkgeschwindigkeitsmessgröße nicht direkt in diese Ermittlung, sondern in Kombination mit Inertialmessgrößen, welche *per se* von einer zu einer ggf. fehlerbehafteten Erfassung von Messgrößen führenden Dynamik der Fahrwerkeinheit unabhängig sind, einbezogen wird und das Einbeziehen der Fahrwerkgeschwindigkeitsmessgröße nach Erkennung eines anomalen Bereitstellungsvorgangs, welcher beispielsweise durch ein Gleiten oder ein Schleudern der Fahrwerkeinheit, eine Fehlmessung der Sensoreinheit oder eine fehlerhafte Übertragung von Ausgangsdaten derselben hervorgerufen werden kann, eingestellt wird. Die Fahrwerkgeschwindigkeitsmessgröße kann daher vorteilhaft zur Unterstützung der Inertialberechnung genutzt werden, wobei einem negativen Einfluss, welcher durch der Erfassung dieser Fahrwerkgeschwindigkeitsmessgröße inhärente Fehlermöglichkeiten hervorgerufen wird, durch die vorgeschlagen Maßnahme vorteilhaft entgegengewirkt werden kann.

Unter einer "Fahrwerkeinheit" soll insbesondere eine Baugruppe des Schienenfahrzeugs verstanden werden, die zumindest ein mit einer Schiene in Kontakt stehendes Rad aufweist. Die Fahrwerkeinheit entspricht vorzugsweise einem Drehgestell, welches insbesondere mit einem Antriebsmotor, der in einem Bremsvorgang zweckmäßigerweise als elektrodynamische Bremse dient, und/oder einer anderweitigen Bremseinrichtung ausgestattet ist, wie z.B. einer Federspeicherbremse. Sie kann jedoch einer einzelnen Radachse oder einem einzelnen Rad entsprechen, welcher bzw. welches vorzugsweise mit einem derartigen Antriebsmotor gekoppelt und/oder mit einer derartigen Bremseinrichtung ausgestattet ist.

Zur "Bereitstellung" der Fahrwerkgeschwindigkeitsmessgröße weist die Sensoreinheit zumindest einen Sensor zur Erfassung einer Messgröße auf, die der Fahrwerkgeschwindigkeitsmessgröße entspricht oder zur Bildung dieser mittels einer weiteren Kenngröße verarbeitet wird. Der Sensor führt zweckmäßigerweise zumindest einen Messvorgang an zumindest einem Rad der Fahrwerkeinheit bzw. an einem mit diesem mechanisch, insbesondere starr mechanisch gekoppelten Antriebselement zum Antreiben des Rads aus, wie insbesondere einer Radachse oder einem Element eines Antriebsmotors. Die Messgröße ist dabei zumindest eine von der Raddynamik beeinflusste Kenngröße. Der zumindest eine Sensor der Sensoreinheit ist in einer bevorzugten Ausführung der Erfindung als Drehzahlgeber ausgebildet, wobei die Fahrwerkgeschwindigkeitsmessgröße einer Drehzahl bzw. einer zu einer Drehzahl proportionalen Größe entspricht. Zur Bildung der Fahrwerkgeschwindigkeitsmessgröße auf der Basis der Messgröße kann zumindest ein weiterer Parameter, wie insbesondere eine Raddurchmesserkenngröße, herangezogen werden. Umfasst die Fahrwerkeinheit mehrere Räder, kann die Sensoreinheit mehrere Sensoren aufweisen, die jeweils einem unterschiedlichen Rad zugeordnet sind, wobei die Ausgänge der Sensoren zur Bereitstellung der Fahrwerkgeschwindigkeitsmessgröße dienen. Diese kann dabei durch eine Mittelung über die einzelnen Räder der Fahrwerkeinheit bereitgestellt werden.

Die Referenzgeschwindigkeitskenngröße kann auf der Basis der Fahrwerkgeschwindigkeitsmessgröße dadurch gebildet werden, dass sie der Fahrwerkgeschwindigkeitsmessgröße bzw. der mit einem von der Rad- bzw. Schienenfahrzeugdynamik unabhängigen Faktor multiplizierten Fahrwerkgeschwindigkeitsmessgröße entspricht oder dass sie mit einer weiteren Geschwindigkeitskenngröße verknüpft wird.

Der anomale Bereitstellungsvorgang kann insbesondere durch einen Vergleich der Fahrwerkgeschwindigkeitsmessgröße mit der Referenzkenngröße erfasst werden. Insbesondere kann hierzu ein Schwellwert voreingestellt sein, wobei eine mit der Fahrwerkgeschwindigkeitsmessgröße und der Referenzkenngröße gebildete Differenz mit diesem Schwellwert verglichen wird. Hierdurch kann eine auf einen anomalen Bereitstellungsvorgang deutende, signifikante Abweichung der Fahrwerkgeschwindigkeitsmessgröße von der Referenzkenngröße einfach erkannt werden. Als Referenzkenngröße kann insbesondere die ermittelte Inertialgeschwindigkeitskenngröße herangezogen werden.

Unter einer "Geschwindigkeitskenngröße" soll eine Geschwindigkeit oder eine Kenngröße verstanden werden, welche eine eindeutige Bestimmung einer Geschwindigkeit ermöglicht. Eine Geschwindigkeit ist dabei im üblichen Sinne eine Geschwindigkeit relativ zu einem im Bezug zu der vom Schienenfahrzeug befahrenen Strecke festen Beobachter. Die Geschwindigkeitskenngröße kann ein Vektor oder eine auf einen Vektor bezogene Zahl sein, wie z.B. ein Vektorbetrag oder eine bestimmte Vektorkomponente.

Unter einer "Inertialgeschwindigkeitskenngröße" soll insbesondere eine Geschwindigkeitskenngröße verstanden werden, die als Ergebnis der von der Recheneinheit durchgeführten Inertialberechnung zur weiteren Auswertung bereitgestellt wird. Sie ist eine Kenngröße für die lokale Geschwindigkeit der Inertialmesseinheit bzw. eines Grundkörpers, mit welchem diese verbunden ist. Ist die Inertialmesseinheit mit einem Grundkörper der Fahrwerkeinheit starr verbunden, ist die Inertialgeschwindigkeitskenngröße eine auf die Fahrwerkeinheit bezogene, lokale Fahrwerkgeschwindigkeitskenngröße, welche von der eigenen Dynamik der Fahrwerkeinheit beeinflussbar ist. Insbesondere kann die Inertialgeschwindigkeitskenngröße eine Kenngröße für die Schwerpunktgeschwindigkeit der Fahrwerkeinheit sein. Sind relative Bewegungen der Fahrwerkeinheit relativ zu einem Wagenkasten des Schienenfahrzeugs möglich, kann dabei die Inertialgeschwindigkeitskenngröße von der auf das gesamte Schienenfahrzeug bezogenen Fahrgeschwindigkeit unterschiedlich sein. Ist die Fahrwerkeinheit als Drehgestell ausgebildet, kann die Inertialgeschwindigkeitskenngröße dabei eine Drehgestellgeschwindigkeitskenngröße sein. Ist die Inertialmesseinheit mit einem Wagenkasten des Schienenfahrzeugs starr verbunden, kann sie eine Kenngröße für die Schwerpunktgeschwindigkeit des Wagenkastens sein.

Unter einer "Inertialberechnung" soll eine Berechnung verstanden werden, durch welche zumindest eine Geschwindigkeitsgröße auf der Basis von durch die Inertialmesseinheit erfassten Inertialmessgrößen, insbesondere durch numerische Integration ermittelt wird. Hierzu sind Algorithmen bekannt, wie insbesondere ein sogenannter "Strapdown-Algorithmus", welcher in Kombination mit fahrzeugfesten Sensoren der Inertialmesseinheit angewandt werden kann. Die Ausführung einer Inertialberechnung ist in der Fachliteratur, wie insbesondere in "Integrierte Navigationssysteme", Jan Wendel, Oldenburg Wissenschaftsverlag, München 2007, ISBN 978-3-486-58160-7, ausreichend bekannt und wird hier näher erläutert.

Im ersten Betriebsmodus wird die Inertialberechnung zumindest auf der Basis der Inertialmessgrößen und der Referenzgeschwindigkeitskenngröße durchgeführt. Die Berücksichtigung der Referenzgeschwindigkeitskenngröße dient dazu, eine Abweichung in der Inertialberechnung zu schätzen, wobei die Schätzung für die Ermittlung der Inertialgeschwindigkeitskenngröße durch deren Rückkopplung in die Inertialberechnung berücksichtigt wird. Diese Abweichung kann insbesondere eine systematische Abweichung sein, die z.B. aufgrund eines systematischen Fehlers in der Erfassung der Inertialmessgrößen durch die Inertialmesseinheit entstehen kann, oder eine statistische Abweichung sein. Unter einer "Abweichung" kann eine Abweichung einer einzelnen Kenngröße oder mehrerer Kenngrößen verstanden werden.

Die Inertialberechnung gemäß dem zweiten Betriebsmodus kann dadurch ohne Berücksichtigung der Referenzgeschwindigkeitskenngröße durchgeführt werden, dass die Bildung der Referenzgeschwindigkeitskenngröße und/oder die Bereitstellung der Fahrwerkgeschwindigkeitsmessgröße eingestellt wird bzw. werden, und/oder dass die Recheneinheit von der Referenzgeschwindigkeitskenngröße bzw. von einer die Referenzgeschwindigkeitskenngröße übertragenden Leitung entkoppelt wird.

In einer bevorzugten Ausführung der Erfindung wird vorgeschlagen, dass ein erster Rechenbaustein der Recheneinheit aus den Inertialmessgrößen einen Schätzwert der Inertialgeschwindigkeitskenngröße ermittelt, der - im ersten Betriebsmodus - zur Schätzung der Abweichung mit der Referenzgeschwindigkeitskenngröße mittels eines einen Zustandsbeobachter bildenden, zweiten Rechenbausteins der Recheneinheit verknüpft wird, wobei die vom zweiten Rechenbaustein geschätzte Abweichung vom ersten Rechenbaustein herangezogen wird. Unter einem "Zustandsbeobachter" soll ein Rechensystem verstanden werden, welches eine Schätzung des Zustands eines dynamischen Systems auf der Basis von einer Ausgangsgröße dieses dynamischen Systems und von Messwerten für diese Ausgangsgröße bereitstellt. Bei der Anwendung eines Zustandsbeobachters auf den vorliegenden Fall einer Inertialberechnung entsprechen das "dynamische System" der Fehlerdynamik der vom ersten Rechenbaustein ausgeführten Inertialberechnung und der "Zustand" der zu schätzenden Abweichung, wobei der Schätzwert der Inertialgeschwindigkeitskenngröße der "Ausgangsgröße" entspricht und die Abweichung auf der Basis dieser Ausgangsgröße und der als "Messwert" dienenden Referenzgeschwindigkeitskenngröße geschätzt wird.

Für eine mögliche Implementierung des Zustandsbeobachters gilt beispielsweise

$$\mathbf{x}^+_{k+1} = \mathbf{x}^-_{k+1} + K_k \ (\mathbf{z}_k - H \ \mathbf{x}^-_{k+1})$$

wobei

$$\mathbf{x}^-_{k+1} = \Phi \ \mathbf{x}^+_k$$

und $\mathbf{x}^+$ der "Zustand", d.h. die zu schätzende Abweichung, $\Phi$ eine Modellierung des "dynamischen Systems", d.h. der Fehlerdynamik der Inertialberechnung, $\mathbf{z}$ die "gemessene" Differenz zwischen dem Schätzwert der Inertialgeschwindigkeitskenngröße und der Referenzgeschwindigkeitskenngröße und H eine Modellierung des Einflusses des Messprozesses auf den geschätzten Zustand $\mathbf{x}^-$ bei der Messung $\mathbf{z}$ sind. K ist eine Gewichtungsmatrix (auch Beobachterverstärkung oder "Gain-Matrix" genannt), welche insbesondere Fehler bei der Messung $\mathbf{z}$ berücksichtigt. Die Indizes k, k+1 bezeichnen die Zeitpunkte $t_k$, $t_{k+1}$.

Mögliche algorithmische Implementierungen für den Zustandsbeobachter stellen beispielsweise ein Luenberger-Beobachter oder ein Kalman-Filter (in dieser Anwendung auch als "Error-State-Kalman-Filter" genannt) dar.

Der erste Betriebsmodus und der zweite Betriebsmodus für die Ausführung der Inertialberechnung durch die Recheneinheit unterscheiden sich voneinander durch die Berücksichtigung der Referenzgeschwindigkeitskenngröße, welche auf der Basis der Fahrwerkgeschwindigkeitsmessgröße gebildet ist. Es sind verschiedene Ausbildungen des ersten Betriebsmodus möglich, die von der Bildungsart der Referenzgeschwindigkeitskenngröße abhängen. Gemäß einer ersten, einfach zu implementierenden Ausbildung des ersten Betriebsmodus entspricht die Referenzgeschwindigkeitskenngröße dynamisch der Fahrwerkgeschwindigkeitsmessgröße. Darunter soll verstanden werden, dass die Referenzgeschwindigkeitskenngröße identisch mit der Fahrwerkgeschwindigkeitsmessgröße ist bzw. dass sie auf der Basis der Fahrwerkgeschwindigkeitsmessgröße und auf der Basis von einem oder mehreren Faktoren bereitgestellt wird, die von der Fahrwerkeinheit- bzw. Schienenfahrzeugdynamik unabhängig sind. Es wird dabei der Fall umfasst, bei welchem zur Bildung der Referenzgeschwindigkeitskenngröße die Fahrwerkgeschwindigkeitsmessgröße mit einem konstanten Faktor multipliziert wird. Zur Bildung der Referenzgeschwindigkeitskenngröße wird zweckmäßigerweise dann keine weitere dynamische Kenngröße als die Fahrwerkgeschwindigkeitsmessgröße herangezogen. Im zweiten Betriebsmodus, bei welchem die Referenzgeschwindigkeitskenngröße von der Recheneinheit unberücksichtigt ist, wird der Zustandsbeobachter zweckmäßigerweise in einem freien Propagationsmodus betrieben. In der oben erläuterten, möglichen Implementierung des Zustandsbeobachters wird hierzu die Beobachterverstärkung K auf den Wert 0 gesetzt.

Gemäß einer zweiten Ausbildung des ersten Betriebsmodus wird eine globale Geschwindigkeitskenngröße bereitgestellt und die Referenzgeschwindigkeitskenngröße wird auf der Basis der Fahrwerkgeschwindigkeitsmessgröße und der globalen Geschwindigkeitskenngröße gebildet, wodurch eine Schätzung der Abweichung besonders präzise gemacht werden kann. Unter einer "globalen Geschwindigkeitskenngröße" soll eine Geschwindigkeitskenngröße verstanden werden, die auf die Dynamik des gesamten Schienenfahrzeugs bezogen ist. Die globale Geschwindigkeitskenngröße unterscheidet sich von der Inertialgeschwindigkeitskenngröße, welche sich ggf. auf die eigene Dynamik der Fahrwerkeinheit beziehen kann.

Verfügt das Schienenfahrzeug über einen Fahrzeugbus, über welchen Daten fahrzeugweit übertragen werden können, kann die globale Geschwindigkeitskenngröße mittels des Fahrzeugbusses bereitgestellt werden oder sie kann auf der Basis von Kenngrößen bereitgestellt werden, die mittels des Fahrzeugbusses zur Verfügung gestellt werden.

Im zweiten Betriebsmodus, bei welchem die Referenzgeschwindigkeitskenngröße von der Recheneinheit unberücksichtigt ist, wird - bei dieser Ausbildung des ersten Betriebsmodus - zur Schätzung der Abweichung der Schätzwert der vom ersten Rechenbaustein ermittelten Inertialgeschwindigkeitskenngröße mit der globalen Geschwindigkeitskenngröße mittels des zweiten Rechenbausteins verknüpft, wobei die vom zweiten Rechenbaustein geschätzte Abweichung vom ersten Rechenbaustein herangezogen wird, oder der Zustandsbeobachter in einem freien Propagationsmodus betrieben wird. In der erstgenannten Alternative kann eine Schätzung der Abweichung auch dann in der Inertialberechnung berücksichtigt werden, wenn ein anomaler Bereitstellungsvorgang der Fahrwerkgeschwindigkeitsmessgröße erfasst wurde und daher eine Berücksichtigung der aus dieser gebildeten Referenzgeschwindigkeitskenngröße vermieden werden soll, indem beim Übergang vom ersten Betriebsmodus in den zweiten Betriebsmodus die globale Geschwindigkeitskenngröße die Referenzgeschwindigkeitskenngröße ersetzt. Die zweitgenannte Alternative kann dann bevorzugt zur Anwendung kommen, wenn die globale Geschwindigkeitskenngröße nicht bereitgestellt werden kann bzw. fehlerbehaftet ist.

Es sind verschiedene Ausbildungen der globalen Geschwindigkeitskenngröße möglich. Gemäß einer ersten Bildungsart, welche sich für eine Ausführung des Schienenfahrzeugs mit mehreren Fahrwerkeinheiten eignet, wird die globale Geschwindigkeitskenngröße zumindest auf der Basis einer Geschwindigkeitskenngröße von zumindest einer von der ersten Fahrwerkeinheit unterschiedlichen Fahrwerkeinheit bereitgestellt. Insbesondere kann die globale Geschwindigkeitskenngröße zumindest auf der Basis einer Mittelung von Geschwindigkeitskenngrößen von mehreren, jeweils von der ersten Fahrwerkeinheit unterschiedlichen Fahrwerkeinheiten bereitgestellt werden. Dabei kann die jeweilige Varianz der entsprechenden Geschwindigkeitskenngrößen berücksichtigt werden. Die Geschwindigkeitskenngrößen der weiteren Fahrwerkeinheiten können jeweils als Inertialgeschwindigkeitskenngröße mittels des oben für die erste Fahrwerkeinheit beschriebenen Verfahrens bereitgestellt werden.

Alternativ kann die globale Geschwindigkeitskenngröße mittels einer globalen Erfassungsvorrichtung des Schienenfahrzeugs bereitgestellt werden, die von der Inertialmesseinheit unterschiedlich ist. Unter einer "globalen Erfassungsvorrichtung" soll eine Erfassungsvorrichtung verstanden werden, die von einer lokalen, auf eine Fahrwerkeinheit bezogenen Erfassungsvorrichtung unabhängig, insbesondere unterschiedlich ist. Insbesondere kann die globale Erfassungsvorrichtung einmalig im Schienenfahrzeug vorhanden sein. Diese Erfassungsvorrichtung kann insbesondere von einer Ortungsvorrichtung gebildet sein, die zur Ermittlung einer Positionskenngröße des Schienenfahrzeugs dient. Beispielsweise kann die Positionskenngröße durch die Erfassung von Funksignalen ermittelt werden, die von streckenseitigen, festen Einrichtungen, wie z.B. Streckenbalisen oder Mobilfunkantennen, oder von Satelliten gestrahlt werden.

In der betrachteten, zweiten Ausbildung des ersten Betriebsmodus wird in einer bevorzugten Ausführung der Erfindung zur Bereitstellung der Referenzgeschwindigkeitskenngröße die globale Geschwindigkeitskenngröße mit der Fahrwerkgeschwindigkeitsmessgröße mittels eines auf dem Prinzip der Sensordatenfusion beruhenden Rechenbausteins verknüpft. Dadurch kann ein Einfluss von Fehlern, mit welchen die Bereitstellung der Fahrwerkgeschwindigkeitsmessgröße behaftet ist, mittels der Verknüpfung dieser mit der globalen Geschwindigkeitskenngröße vermindert werden. Zur Implementierung einer Sensordatenfusion sind verschiedene Algorithmen, wie insbesondere ein Kalman-Filter, möglich.

Gemäß einer weiteren vorteilhaften Ausbildung der Erfindung wird vorgeschlagen, dass der ersten Fahrwerkeinheit mehrere Recheneinheiten zugeordnet sind, wobei jede Recheneinheit die Inertialberechnung jeweils gemäß den Betriebsmodi durchführen kann und ein Ergebnis der Inertialberechnung an einem Ausgang bereitstellt, und den Recheneinheiten eine Schaltvorrichtung zugeordnet ist, die zur Bereitstellung der Inertialgeschwindigkeitskenngröße wahlweise mit einem der Ausgänge in Verbindung steht. Dadurch kann eine wahlweise Bereitstellung der Inertialgeschwindigkeitskenngröße erfolgen, die auf die von den Recheneinheiten aktuell angewandten Betriebsmodi abgestimmt ist. Beispielsweise kann die Schaltvorrichtung derart gesteuert werden, dass sie eine Verbindung mit einem Recheneinheitsausgang nur dann herstellt, wenn die entsprechende Recheneinheit im zweiten Betriebsmodus betrieben wird. Hiermit kann der Einfluss von Fehlern, mit welchen die Bereitstellung der Fahrwerkgeschwindigkeitsmessgröße behaftet ist, vorteilhaft weiter vermindert werden.

Dieser Einfluss kann dadurch besonders effizient vermindert werden, dass jeder Recheneinheit jeweils eine Schalteinheit vorgeschaltet ist, welche in einem ersten Schaltzustand die Referenzgeschwindigkeitskenngröße für die jeweilige Recheneinheit zur Durchführung des ersten Betriebsmodus bereitstellt und in einem zweiten Schaltzustand die Recheneinheit zur Durchführung des zweiten Betriebsmodus von der Referenzgeschwindigkeitskenngröße entkoppelt, wobei - beim Nichtvorliegen eines anomalen Erfassungsvorgangs - Schaltzyklen der Schalteinheiten und ein Schaltzyklus der Schaltvorrichtung derart aufeinander abgestimmt sind, dass die Schaltvorrichtung bei jedem Schaltvorgang eine Verbindung mit einer Recheneinheit herstellt, welche die Inertialberechnung gemäß dem zweiten Betriebsmodus durchführt, und - beim Vorliegen eines anomalen Erfassungsvorgangs - alle Schalteinheiten im zweiten Schaltzustand geschaltet sind. Hiermit kann im Hinblick auf einen anomalen Bereitstellungsvorgang der Fahrwerkgeschwindigkeitsmessgröße eine besonders zuverlässige Ermittlung der Inertialgeschwindigkeitskenngröße erreicht werden, da das Ergebnis einer die Fahrwerkgeschwindigkeitsmessgröße einbeziehenden Ermittlung der Inertialgeschwindigkeitskenngröße nicht direkt als Ausgangsgröße bereitgestellt werden kann. Es kann daher mittels der Schaltzyklen ausgeschlossen werden, dass Fehler in der Bereitstellung der Fahrwerkgeschwindigkeitsmessgröße einen direkten Einfluss auf die Bereitstellung der Inertialgeschwindigkeitskenngröße haben können. Wird die Inertialgeschwindigkeitskenngröße als die Referenzkenngröße zur Erfassung eines anomalen Bereitstellungsvorgangs der Fahrwerkgeschwindigkeitsmessgröße herangezogen, kann dieser Erfassungsvorgang selbst besonders zuverlässig erfolgen. Somit kann ein nachteilhafter Einfluss eines anomalen Bereitstellungsvorgangs in vielen Hinsichten vermieden werden.

In diesem Zusammenhang wird gemäß einer bevorzugten Ausführung vorgeschlagen, dass die Schalteinheiten in deren zweitem Schaltzustand die globale Geschwindigkeitskenngröße für die jeweilige Recheneinheit zur Durchführung des zweiten Betriebsmodus bereitstellen.

Eine weitere Reduzierung des Einflusses eines anomalen Bereitstellungsvorgangs der Fahrwerkgeschwindigkeitsmessgröße kann außerdem dadurch erreicht werden, dass beim Nichtvorliegen eines anomalen Erfassungsvorgangs die Schaltzyklen der Schalteinheiten und der Schaltzyklus der Schaltvorrichtung derart aufeinander abgestimmt sind, dass die Schaltvorrichtung bei jedem Schaltvorgang eine Verbindung mit einer der Recheneinheiten herstellt, welche die Inertialberechnung seit zumindest einer vorbestimmten Zeit gemäß dem zweiten Betriebsmodus durchführt.

Weist das Schienenfahrzeug eine von der Inertialmesseinheit unterschiedliche, globale Erfassungsvorrichtung auf, welche für die zweite Ausbildung des ersten Betriebsmodus die globale Geschwindigkeitskenngröße bereitstellt, wird vorgeschlagen, dass - in einem Raddurchmesserbestimmungsmodus - die Inertialberechnung gemäß dem zweiten Betriebsmodus zur Ermittlung der Inertialgeschwindigkeitskenngröße durchgeführt wird und zumindest eine Raddurchmesserkenngröße der Fahrwerkeinheit zumindest auf der Grundlage der ermittelten Inertialgeschwindigkeitskenngröße ermittelt wird. Der zweite Betriebsmodus wird hierbei entsprechend der zweiten Ausbildung des ersten Betriebsmodus, bei welchem die globale Geschwindigkeitskenngröße in der Inertialberechnung berücksichtigt wird, ausgeführt, indem zur Schätzung der Abweichung der Schätzwert mit der globalen Geschwindigkeitskenngröße mittels des zweiten Rechenbausteins verknüpft wird, wobei die vom zweiten Rechenbaustein geschätzte Abweichung vom ersten Rechenbaustein herangezogen wird. Hiermit kann die Ermittlung der Inertialgeschwindigkeitskenngröße ohne Berücksichtigung der Fahrwerkgeschwindigkeitsmessgröße einerseits und - da die globale Geschwindigkeitskenngröße mittels der globalen Erfassungsvorrichtung bereitgestellt wird - unabhängig von einer an einer Fahrwerkeinheit gemachten Erfassung andererseits erfolgen. Dadurch kann eine Ermittlung der Inertialgeschwindigkeitskenngröße erreicht werden, die von Radgrößen der Fahrwerkeinheit unabhängig ist, sodass sie zur Ermittlung der Raddurchmesserkenngröße herangezogen werden kann. Zur Ermittlung der Raddurchmesserkenngröße wird zweckmäßigerweise zusätzlich zur Inertialgeschwindigkeitskenngröße zumindest eine von der Sensoreinheit erfasste Messgröße herangezogen. Ist zumindest ein Sensor der Sensoreinheit als Drehzahlgeber ausgebildet, kann die Raddurchmesserkenngröße besonders einfach auf der Grundlage einer erfassten Drehzahl und der Inertialgeschwindigkeitskenngröße ermittelt werden.

Die Ermittlung der Raddurchmesserkenngröße kann vorteilhaft zur Erhöhung der Ermittlungsgenauigkeit der Inertialgeschwindigkeitskenngröße herangezogen werden, indem in einer dem Raddurchmesserbestimmungsmodus folgenden Durchführung der Inertialberechnung gemäß dem ersten Betriebsmodus die im Raddurchmesserbestimmungsmodus ermittelte Raddurchmesserkenngröße bei der Bereitstellung der Fahrwerkgeschwindigkeitsmessgröße einbezogen wird.

Es werden Ausführungsbeispiele der Erfindung anhand der Zeichnungen erläutert. Es zeigen:

Figur 1:    einen elektrischen Triebzug mit Fahrwerkeinheiten in einer Seitenansicht,

Figur 2:    eine mit einer Fahrwerkeinheit gekoppelte Inertialmesseinheit und eine Rechenvorrichtung zur Durchführung einer Inertialberechnung,

Figur 3:    die Bereitstellung einer Referenzgeschwindigkeitskenngröße für die Inertialberechnung gemäß einer ersten Ausführung,

Figur 4:    die Bereitstellung einer Referenzgeschwindigkeitskenngröße für die Inertialberechnung gemäß einer zweiten Ausführung,

Figur 5:    eine alternative Ausbildung der Rechenvorrichtung mit mehreren Recheneinheiten zur Durchführung der Inertialberechnung und Schalteinheiten zum Schalten zwischen zwei Betriebsmodi der Recheneinheiten,

Figur 6:    Schaltzyklen der Schalteinheiten,

Figur 7:    eine alternative Ausbildung der Rechenvorrichtung mit einem Modul zur Raddurchmesserbestimmung und

Figur 8:    ein Auswertungsverfahren zum Auswerten eines Ergebnisses der Inertialberechnung.

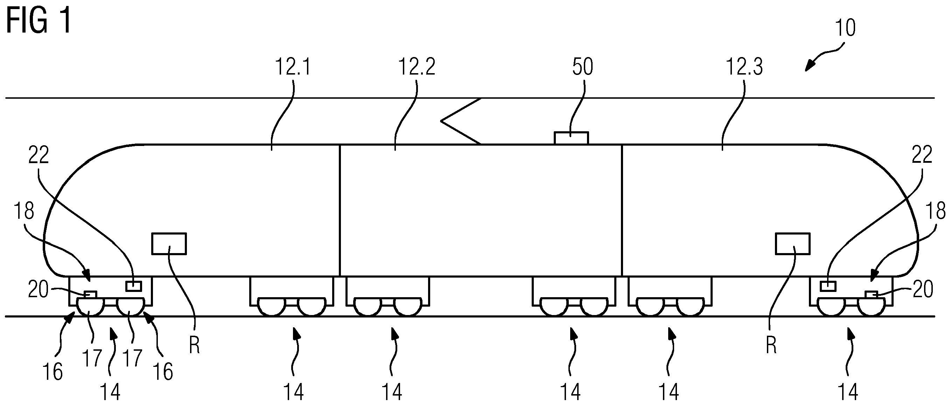

Figur 1 zeigt ein als elektrischer Triebzug ausgebildetes Schienenfahrzeug 10 in einer schematischen Seitenansicht. Es weist mehrere Wagen 12.1 bis 12.3 auf, die jeweils mittels zwei Fahrwerkeinheiten 14 auf Schienen abgestützt sind. Die Fahrwerkeinheiten 14 sind jeweils als ein Drehgestell ausgebildet, durch welches zwei mit den Schienen in Kontakt stehenden Radsätzen 16 gelagert sind. Ein Radsatz 16 weist dabei jeweils zwei Räder 17 auf.

Mehrere, insbesondere zwei Fahrwerkeinheiten 14 umfassen jeweils eine Sensoreinheit 18, die zur Erfassung zumindest einer Messgröße n dient. In der betrachteten Ausführung weist die Sensoreinheit 18 einen Drehzahlgeber 20 auf, der einem Radsatz 16 der Fahrwerkeinheit 14 zugeordnet ist, wobei die Messgröße n der Drehzahl dieses Radsatzes 16 entspricht. Diese Fahrwerkeinheiten 14 sind jeweils mit zumindest einem Antriebsmotor (nicht gezeigt) ausgestattet, welcher in einem Bremsvorgang des Schienenfahrzeugs 10 als elektrodynamische Bremse genutzt und mittels einer Regelung dementsprechend geregelt werden kann.

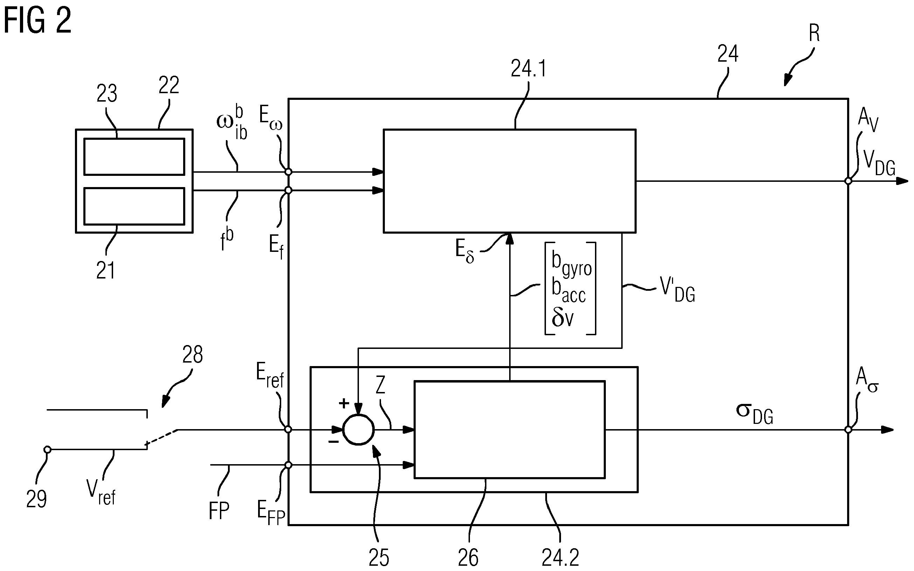

Diesen Fahrwerkeinheiten 14 des Schienenfahrzeugs 10 ist außerdem jeweils eine Inertialmesseinheit 22 zugeordnet, die mit der entsprechenden Fahrwerkeinheit 14 mechanisch starr gekoppelt ist. Die Inertialmesseinheit 22 ist dabei mit einem Grundkörper der entsprechenden Fahrwerkeinheit 14 - in der betrachteten Ausführung der Fahrwerkeinheit 14 als Drehgestell beispielsweise mit dessen Rahmen - mechanisch starr gekoppelt. Die Inertialmesseinheit 22 umfasst in Figur 2 dargestellte Beschleunigungssensoren 21, welche drei translatorische Inertialmessgrößen $f^b_x$, $f^b_y$ und $f^b_z$ ausgeben, sowie drei Gyroskope 23, welche drei rotatorische Inertialmessgrößen $\omega^b_{ib,x}$, $\omega^b_{ib,y}$ und $\omega^b_{ib,z}$ ausgeben. Die Erfassung erfolgt in einem mit der Fahrwerkeinheit 14 festen Bezugssystem der Inertialmesseinheit 22, auch "b-Frame" genannt. Dieses Bezugssystem ist durch drei Achsen x, y, z definiert, wobei die x-Achse - bei gerader Ausrichtung des Schienenfahrzeugs 10 - in Richtung der Fahrzeuglängsache zeigt, die y-Achse parallel zur Gleisebene und senkrecht zur x-Achse ausgerichtet ist, die z-Achse senkrecht zur x-Achse und y-Achse steht und der Ursprung mit der Inertialmesseinheit 22 zusammenfällt. Die translatorischen Inertialmessgrößen können als "Beschleunigungsvektor" $f^b$ dargestellt werden. Die rotatorischen Inertialmessgrößen $\omega^b_{ib,x}$, $\omega^b_{ib,y}$ und $\omega^b_{ib,z}$ können als Drehratenvektor $\omega^b_{ib}$ dargestellt werden. Dieser stellt die im Bezugssystem "b-Frame" gemessenen Drehraten dieses Bezugssystems "b-Frame" relativ zu einem Inertialsystem, auch "i-frame" genannt, dar.

Diesen Fahrwerkeinheiten 14 ist ferner jeweils zumindest eine Rechenvorrichtung R mit zumindest einer Recheneinheit 24 zugeordnet (siehe Figur 2), die eine Inertialberechnung zumindest auf der Basis der Inertialmessgrößen $f^b$, $\omega^b_{ib}$ durchführt. Die Inertialberechnung erfolgt mittels einer Implementierung eines in der fachmännischen Sprache unter dem Begriff "Strapdown-Algorithmus" genannten Algorithmus. Dieser Algorithmus ist aus der Fachliteratur bekannt und wird hier nicht näher erläutert. Durch eine in der Inertialberechnung durchgeführte numerische Integration auf der Basis der Inertialmessgrößen $f^b$, $\omega^b_{ib}$ wird insbesondere ein Schätzwert $V'_{DG}$ einer Inertialgeschwindigkeitskenngröße $V_{DG}$ ermittelt, wie unten anhand von Figur 2 näher erläutert. Die Inertialgeschwindigkeitskenngröße $V_{DG}$ stellt eine Kenngröße für eine Geschwindigkeit dar, welche im üblichen Sinne eine Geschwindigkeit relativ zu einem im Bezug zu der vom Schienenfahrzeug 10 befahrenen Strecke festen Beobachter ist. Die Inertialgeschwindigkeitskenngröße $V_{DG}$ bzw. deren Schätzwert $V'_{DG}$ ergibt sich aus einer numerischen Integration für die im sogenannten Navigationsframe, auch "n-frame" genannt, ausgedrückte Geschwindigkeit $V_n$ und ggf. einer Umrechnung dieser in einem gegenüber dem n-Frame verschobenen Koordinatensystem, dessen Ursprung mit einem Referenzpunkt, insbesondere dem Schwerpunkt, des Körpers zusammenfällt, mit welchem die Inertialmesseinheit 22 starr gekoppelt ist (sogenannte "Hebelarmkompensation"). Durch die starre Verbindung der Inertialmesseinheit 22 mit der Fahrwerkeinheit 14 kann aus der Inertialgeschwindigkeitskenngröße $V_{DG}$ eine Kenngröße für die Fahrwerkeinheitsgeschwindigkeit, insbesondere die Schwerpunktgeschwindigkeit der Fahrwerkeinheit 14 hergeleitet werden. Die Inertialgeschwindigkeitskenngröße $V_{DG}$ kann demnach von der eigenen, lokalen Dynamik der Fahrwerkeinheit 14 beeinflusst werden. In einer weiteren, nicht gezeigten Ausführung kann die Inertialmesseinheit 22 mit einem Wagenkasten des Schienenfahrzeugs 10 starr verbunden sein, wobei die Inertialgeschwindigkeitskenngröße $V_{DG}$ dann eine Kenngröße für die Wagenkastengeschwindigkeit, insbesondere die Schwerpunktgeschwindigkeit des Wagenkastens sein kann.

Im Folgenden wird die Ermittlung der Inertialgeschwindigkeitskenngröße $V_{DG}$ für eine der Fahrwerkeinheiten 14 erläutert, welcher eine Sensoreinheit 18, eine Inertialmesseinheit 22 und eine Rechenvorrichtung R zugeordnet sind. Diese Beschreibung findet für die weitere Fahrwerkeinheit 14 des Schienenfahrzeugs 10 Anwendung, die dementsprechend ausgebildet ist. In einer weiteren Ausführung des Schienenfahrzeugs 10 ist denkbar, dass bei mehr als zwei Fahrwerkeinheiten jeweils eine Sensoreinheit 18, eine Inertialmesseinheit 22 und eine Rechenvorrichtung R vorgesehen sind oder dass diese lediglich für eine einzige Fahrwerkeinheit 14 vorgesehen sind.

Eine strukturelle Implementierung der Recheneinheit 24 ist in Figur 2 gezeigt. Diese weist einen ersten Rechenbaustein 24.1 auf, welcher aus den auf Eingänge $E_f$ und $E_\omega$ der Recheneinheit 24 gegebenen Ausgangsgrößen der Inertialmesseinheit 22 - d.h. den Inertialmessgrößen $f^b$, $\omega^b_{ib}$ - den Schätzwert $V'_{DG}$ der Inertialgeschwindigkeitskenngröße $V_{DG}$ mittels des Strapdown-Algorithmus ermittelt und bereitstellt.

Diese Inertialberechnung kann mittels der Recheneinheit 24 gemäß zwei Betriebsmodi durchgeführt werden.

In einem ersten Betriebsmodus wird bei der Durchführung der Inertialberechnung von der Recheneinheit 24 eine Referenzgeschwindigkeitskenngröße $V_{ref}$ einbezogen. Dies dient dazu, eine Abweichung in der Inertialberechnung zu schätzen und - durch Rückkopplung der geschätzten Abweichung in die Inertialberechnung - einen korrigierten Wert der Inertialgeschwindigkeitskenngröße $V_{DG}$ zu ermitteln. Die Bereitstellung der Referenzgeschwindigkeitskenngröße $V_{ref}$ wird weiter unten näher beschrieben.

Die Recheneinheit 24 weist einen zweiten Rechenbaustein 24.2 auf, welcher einen Zustandsbeobachter bildet. Zur Schätzung der Abweichung werden im Zustandsbeobachter die vom ersten Rechenbaustein 24.1 ermittelten Schätzwert $V'_{DG}$ mit der Referenzgeschwindigkeitskenngröße $V_{ref}$ verknüpft. Dabei wird der Schätzwert $V'_{DG}$ von der Referenzgeschwindigkeitskenngröße $V_{ref}$, die auf einen Eingang $E_{ref}$ der Recheneinheit 24 gegeben wird, mittels eines Differenzbilders 25 des zweiten Rechenbausteins 24.2 subtrahiert. Die dabei ermittelte Differenz $z$ wird auf ein Rechenmodul 26 des zweiten Rechenbausteins 24.2 bzw. des Zustandsbeobachters gegeben. Das Rechenmodul 26 implementiert einen in der fachmännischen Sprache als "Error-State-Kalman-Filter" genannten Algorithmus. Dieser Filter wird für einen Zustandsvektor $x$ angewandt, welcher insbesondere folgende Kenngrößen für das Entstehen einer Abweichung in der Inertialberechnung enthält: eine Kenngröße $b_{gyro}$ betreffend Fehler bezüglich der Inertialmessgrößen $\omega^b_{ib}$, eine Kenngröße $b_{acc}$ betreffend Fehler bezüglich der Inertialmessgrößen $f^b$ und eine Kenngröße $\delta v$ betreffend eine in der Inertialberechnung entstehende Abweichung der aus den Inertialmessgrößen $f^b$, $\omega^b_{ib}$ ermittelten Inertialgeschwindigkeitskenngröße $V_{DG}$.

Ausgehend vom zu einem Zeitpunkt k geschätzten Zustandsvektor $x^+_k$ erfolgt im Rechenmodul 26 eine Schätzung $x^-_{k+1}$ des Zustandsvektors $x$ zum Zeitpunkt k+1 basierend auf einer Modellierung $\Phi$ der Fehlerdynamik der Inertialberechnung:

$$\mathbf{x}^-_{k+1} \;=\; \Phi \; \mathbf{x}^+_k$$

Dies entspricht einer Prädiktionsgleichung des Zustandsbeobachters, die für ein dynamisches System ohne Steuer- bzw. Regelgröße (in der Fachliteratur als Eingang "u" dargestellt) angewandt wird.

Für den Fehler, mit welchem der geschätzte Zustandsvektor $x^-_{k+1}$ behaftet ist, gilt, ausgehend vom zum Zeitpunkt k geschätzten Fehler $P^+_k$

$$P^-_{k+1} \;=\; \Phi \; P^+_k \; \Phi^T \;+\; Q_k$$

mit der Kovarianzmatrix $Q_k$.

Die Schätzung $x^-_{k+1}$ des Zustandsvektors $x$ zum Zeitpunkt k+1 wird mittels des Messungsvektors $z_k$ korrigiert:

$$\mathbf{x}^+_{k+1} \;=\; \mathbf{x}^-_{k+1} \;+\; K_k \; (\mathbf{z}_k \;-\; H \; \mathbf{x}^-_{k+1})$$

wobei H die Beobachtungsmatrix ist und für die Gewichtungsmatrix $K_k$ (auch "Kalman-Gain-Matrix" oder Beobachterverstärkung genannt) Folgendes gilt:

$$K_k \;=\; P^-_{k+1} \; H^T \; (H \; P^-_{k+1} \; H^T \;+\; R_k)^{-1}$$

Dabei ist $R_k$ eine Matrix, welche den Fehler, mit welchem der Messungsvektor $z_k$ behaftet ist, darstellt. Zu diesem Fehler trägt insbesondere ein Fehler bei, mit welchem die Referenzgeschwindigkeitskenngröße $V_{ref}$ behaftet ist.

Für den Fehler, mit welchem der geschätzte Zustandsvektor $x^+_{k+1}$ behaftet ist, gilt

$$P^+_{k+1} \;=\; (1 \;-\; K_k \; H) \; P^-_{k+1}$$

Die oben genannten Kenngrößen $b_{gyro}$, $b_{acc}$ und $\delta v$ des geschätzten Zustandsvektors $x^+_{k+1}$ werden auf einen Eingang $E_\delta$ des ersten Rechenbausteins 24.1 gegeben. Hiermit wird die geschätzte Abweichung ($b_{gyro}$, $b_{acc}$, $\delta v$) in die Inertialberechnung zurückgekoppelt.

Diese Kenngrößen werden durch den ersten Rechenbaustein 24.1 bei der Durchführung der Inertialberechnung berücksichtigt, wodurch eine Abweichung $\delta V_{DG}$ der Inertialgeschwindigkeitskenngröße $V_{DG}$ ermittelt werden kann. Nach Abzug dieser Abweichung $\delta V_{DG}$ vom Schätzwert $V'_{DG}$ im Rechenbaustein 24.1 wird die damit korrigierte Inertialgeschwindigkeitskenngröße $V_{DG}$ an einem Ausgang $A_v$ der Recheneinheit 24 bereitgestellt. Als weitere Ausgangsgröße der Recheneinheit 24 wird die der Inertialgeschwindigkeitskenngröße $V_{DG}$ zugeordnete Varianz $\sigma_{DG}$ aus dem Fehler $P^+_k$ ermittelt und an einem Ausgang $A_\sigma$ der Recheneinheit 24 bereitgestellt.

Die Inertialberechnung kann mittels eines zweiten Betriebsmodus durchgeführt werden. Dieser ist dadurch charakterisiert, dass die Referenzgeschwindigkeitskenngröße $V_{ref}$ bei der Durchführung der Inertialberechnung unberücksichtigt verbleibt.

Zu einem Wechseln zwischen den oben beschriebenen Betriebsmodi ist der Recheneinheit 24, insbesondere dem Zustandsbeobachter 26, welcher im ersten Betriebsmodus die Referenzgeschwindigkeitskenngröße $V_{ref}$ heranzieht, eine Schalteinheit 28 vorgeschaltet. Diese weist einen ersten Schaltzustand auf, in welchem die Schalteinheit 28 die Referenzgeschwindigkeitskenngröße $V_{ref}$ für die Recheneinheit 24 zur Durchführung des ersten Betriebsmodus bereitstellt. In einem zweiten Schaltzustand ist die Recheneinheit 24 zur Durchführung des zweiten Betriebsmodus von der Referenzgeschwindigkeitskenngröße $V_{ref}$ bzw. einer diese Referenzgeschwindigkeitskenngröße $V_{ref}$ übertragenden Leitung entkoppelt.

Es werden nun zwei Ausführungsbeispiele beschrieben, die sich durch die Ausbildung der Referenzgeschwindigkeitskenngröße $V_{ref}$ und die Durchführung der Inertialberechnung im zweiten Betriebsmodus voneinander unterscheiden.

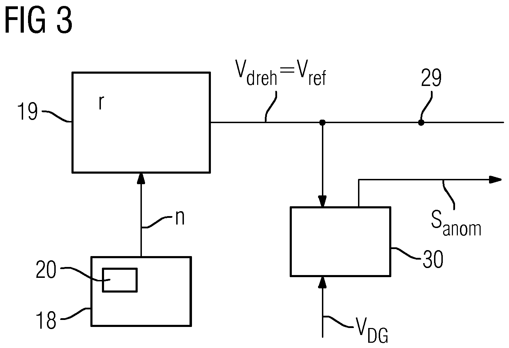

Die Bereitstellung der Referenzgeschwindigkeit $V_{ref}$ gemäß einem ersten Ausführungsbeispiel wird anhand der Figur 3 erläutert.

Diese zeigt die Sensoreinheit 18, welche die Messgröße n erfasst. Aus dieser wird eine auf die jeweilige Fahrwerkeinheit 14 bezogene Fahrwerkgeschwindigkeitsmessgröße $V_{dreh}$ bereitgestellt. Beispielsweise kann aus der als Drehzahl ausgebildeten Messgröße n in einer Einheit 19 die Fahrwerkgeschwindigkeitsmessgröße $V_{dreh}$ als Umfangsgeschwindigkeit des entsprechenden Radsatzes 16 durch die Berücksichtigung von einer Raddurchmesserkenngröße r bereitgestellt werden.

Im betrachteten, ersten Ausführungsbeispiel stellt die Fahrwerkgeschwindigkeitsmessgröße $V_{dreh}$ die von der Recheneinheit 24 im ersten Betriebsmodus herangezogene Referenzgeschwindigkeitskenngröße $V_{ref}$ dar.

Die Bereitstellung der Fahrwerkgeschwindigkeitsmessgröße $V_{dreh}$, insbesondere die Erfassung der dieser zugrunde liegenden Messgröße n wird überwacht. Zu dieser Überwachung wird eine weitere Referenzkenngröße herangezogen, die in einer Erkennungseinheit 30 mit der Fahrwerkgeschwindigkeitsmessgröße $V_{dreh}$ verglichen wird. Die Referenzkenngröße entspricht hierbei der von der Recheneinheit 24 ermittelten Inertialgeschwindigkeitskenngröße $V_{DG}$. Falls die in der Erkennungseinheit 30 gebildete Differenz Abs $(V_{dreh} - V_{DG})$ einen voreingestellten Schwellwert übersteigt, gilt der Bereitstellungsvorgang der Fahrwerkgeschwindigkeitsmessgröße $V_{dreh}$ als "anomal". Dieser Fall kann z.B. bei einem Defekt der Sensoreinheit 18 oder einem Schlupfen der jeweiligen Fahrwerkeinheit 14 eintreten.

Mit der Erfassung eines anomalen Bereitstellungsvorgangs durch die Erkennungseinheit 30 wird von dieser ein Signal $S_{anom}$ erzeugt, welches ein Wechseln vom ersten Betriebsmodus in den zweiten Betriebsmodus bewirkt. Es erfolgt dabei insbesondere eine Betätigung der Schalteinheit 28, welche die Recheneinheit 24, insbesondere den Zustandsbeobachter 26, von der Referenzgeschwindigkeitskenngröße $V_{ref}$ entkoppelt. Außerdem wird ein Signal FP erzeugt, welches auf einen Eingang $E_{FP}$ der Recheneinheit 24 gegeben wird (siehe Figur 2). Beim Vorliegen eines aktiven Signals FP an diesem Eingang $E_{FP}$ wird der zweite Rechenbaustein 24.2 in einem freien Propagationsmodus betrieben. Hierbei wird die Beobachterverstärkung K auf den Wert 0 gesetzt. Dadurch werden lediglich der Systemzustand $x$ und der Fehler P ohne Aktualisierung mittels des Messungsvektors $z$ propagiert.

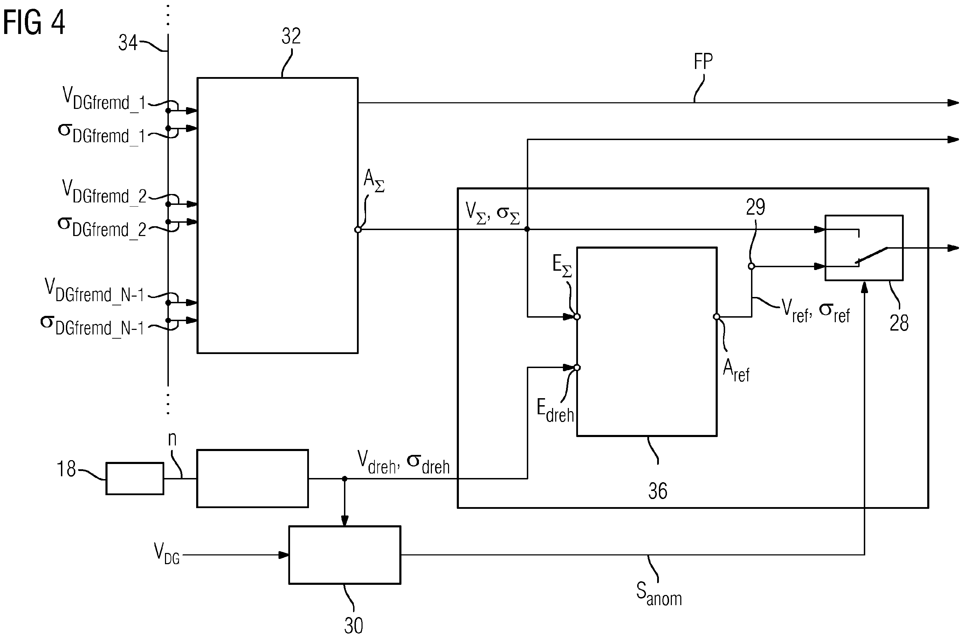

Die Bereitstellung der Referenzgeschwindigkeit $V_{ref}$ gemäß einem zweiten Ausführungsbeispiel wird nun anhand der Figur 4 erläutert.

In diesem Ausführungsbeispiel wird eine globale Geschwindigkeitskenngröße $V_\Sigma$ bereitgestellt. Diese Bereitstellung, welche in einem Fusionsbaustein 32 durchgeführt wird, erfolgt auf der Basis von zumindest einer Geschwindigkeitskenngröße $V_{DGfremd\_i}$, welche auf eine weitere Fahrwerkeinheit 14 des Schienenfahrzeugs 10 bezogen ist. Werden mehrere Geschwindigkeitskenngrößen $V_{DGfremd\_i}$ herangezogen, sind diese jeweils auf eine unterschiedliche Fahrwerkeinheit 14 bezogen. Angenommen, dass die obige Beschreibung auf die Ermittlung der Inertialgeschwindigkeitskenngröße $V_{DG}$ für die Fahrwerkeinheit 14.N gerichtet ist, wobei N der Anzahl der Fahrwerkeinheiten 14 im Schienenfahrzeug 10 entspricht, kann die Ermittlung der globalen Geschwindigkeitskenngröße $V_\Sigma$ auf der Basis von Geschwindigkeitskenngrößen $V_{DGfremd\_1}$ bis $V_{DGfremd\_N-1}$ wie in der Figur dargestellt erfolgen, falls eine Geschwindigkeitskenngröße für jede der Fahrwerkeinheiten 14.1 bis 14.N-1 verfügbar ist. Es ist jedoch eine Ausführung denkbar, bei welcher weniger Geschwindigkeitskenngrößen $V_{DGfremd\_i}$ verfügbar sind.

Die herangezogenen Geschwindigkeitskenngrößen $V_{DGfremd\_i}$ können mittels der für die Inertialgeschwindigkeitskenngröße $V_{DG}$ oben beschriebenen Methode ermittelt werden und demnach jeweils als Inertialgeschwindigkeitskenngröße $V_{DG\_i}$ der zugeordneten Fahrwerkeinheit 14.i ausgebildet sein. Der Fusionbaustein 32 ist an einen Fahrzeugdatenbus 34, insbesondere den sogenannten "MVB" (oder Multifunction Vehicle Bus"), angeschlossen, aus welchem die Geschwindigkeitskenngrößen $V_{DGfremd\_i}$ vom Fusionsbaustein 32 ausgelesen werden können.

Die globale Geschwindigkeitskenngröße $V_\Sigma$ ist in der betrachteten Ausführung das Ergebnis einer Fusionierung und einer Plausibilisierung der einzelnen, herangezogenen Geschwindigkeitskenngrößen $V_{DGfremd\_i}$, die vom Fusionsbaustein 32 ausgeführt werden. Dies erfolgt unter Berücksichtigung der Varianzen $\sigma_{DGfremd\_i}$, die jeweils der entsprechenden Geschwindigkeitskenngröße $V_{DGfremd\_i}$ zugeordnet und ebenfalls über den Fahrzeugdatenbus 34 zur Verfügung gestellt werden. Die Varianzen $\sigma_{DGfremd\_i}$ können jeweils wie oben beschrieben durch einen Zustandsbeobachter ermittelt werden. Die Fusionierung und Plausibilisierung der einzelnen Geschwindigkeitskenngrößen $V_{DGfremd\_i}$ entspricht insbesondere einer mittels der Varianzen $\sigma_{DGfremd\_i}$ gewichteten Mittelung der Geschwindigkeitskenngrößen $V_{DGfremd\_i}$. Ist eine Geschwindigkeitskenngrößen $V_{DGfremd\_i}$ nicht verfügbar, kann im Auswertealgorithmus die entsprechende Varianz auf den Wert unendlich gesetzt werden.

Es werden an einem Ausgang $A_\Sigma$ des Fusionsbausteins 32 als Ergebnisse der Fusionierung und einer Plausibilisierung der einzelnen Geschwindigkeitskenngrößen $V_{DGfremd\_i}$ die globale Geschwindigkeitskenngröße $V_\Sigma$ und deren Varianz $\sigma_\Sigma$ bereitgestellt.

Die Referenzgeschwindigkeitskenngröße $V_{ref}$, welche bei der Ausführung der Inertialberechnung im ersten Betriebsmodus von der Recheneinheit 24 herangezogen wird, wird auf der Basis der Fahrwerkgeschwindigkeitsmessgröße $V_{dreh}$ und der globalen Geschwindigkeitskenngröße $V_\Sigma$ bereitgestellt. Dies erfolgt mittels eines zur Rechenvorrichtung R zugehörenden Fusionsbausteins 36, welcher zur Bereitstellung der Referenzgeschwindigkeitskenngröße $V_{ref}$ die globale Geschwindigkeitskenngröße $V_\Sigma$ mit der Fahrwerkgeschwindigkeitsmessgröße $V_{dreh}$ basierend auf dem Prinzip der Sensordatenfusion verknüpft. Im betrachteten Ausführungsbeispiel ist der Fusionsbaustein 36 mit einer Implementierung eines Kalman-Filters ausgestattet. Als Eingangsgrößen werden die globale Geschwindigkeitskenngröße $V_\Sigma$ und die zugeordnete Varianz $\sigma_\Sigma$ auf einen Eingang $E_\Sigma$ des Fusionsbausteins 36 sowie die Fahrwerkgeschwindigkeitsmessgröße $V_{dreh}$ und die zugeordnete Varianz $\sigma_{dreh}$ auf einen Eingang $E_{dreh}$ des Fusionsbausteins 36 gegeben.

Die Bereitstellung der Fahrwerkgeschwindigkeitsmessgröße $V_{dreh}$ und die Erkennungseinheit 30 sind ebenfalls dargestellt, wobei auf die obige Beschreibung zu Figur 3 verwiesen wird.

Der Kalman-Filter wird für einen Zustandsvektor $\mathbf{x}$ angewandt, welcher die fusionierte Referenzgeschwindigkeit $V_{ref}$ darstellt. Ausgehend von einem Wert für den Zustandsvektor $\mathbf{x}$ zu einem Zeitpunkt k erfolgt eine Schätzung des Zustandsvektors $\mathbf{x}$ zum Zeitpunkt

k+1 basierend auf einer Modellierung $\Phi$ der Dynamik der Fahrwerkeinheit 14 und des Schienenfahrzeugs 10:

$$\mathbf{x}^-_{k+1} = \Phi\ \mathbf{x}^+_k$$

Insbesondere kann die Matrix $\Phi$ ein dynamisches Modell beschreiben, bei welchem eine konstante Beschleunigung angenommen wird.

Für den Schätzungsfehler gilt:

$$P^-_{k+1} = \Phi\ P^+_k\ \Phi^T$$

Die Schätzung wird mittels des Messungsvektors $\mathbf{z}_k$, welcher die Fahrwerkgeschwindigkeitsmessgröße $V_{dreh}$ und die globale Geschwindigkeitskenngröße $V_\Sigma$ zusammenfasst, korrigiert:

$$\mathbf{x}^+_{k+1} = \mathbf{x}^-_{k+1} + K_k\ (\mathbf{z}_k - H\ \mathbf{x}^-_{k+1}),$$

mit $\mathbf{z}_k = (V_\Sigma, V_{dreh})$, wobei H die Beobachtungsmatrix ist und für die Gewichtungsmatrix $K_k$ (auch "Kalman-Gain-Matrix" genannt) folgendes gilt:

$$K_k = P^-_{k+1}\ H^T\ (H\ P^-_{k+1}\ H^T + R_k)^{-1}$$

Dabei ist $R_k$ eine Matrix, welche die Messfehler $\sigma_{dreh}$ und $\sigma_\Sigma$ enthält.

Für den Fehler, mit welchem der geschätzte Zustandsvektor $\mathbf{x}^+_{k+1}$ behaftet ist, gilt

$$P^+_k = (1 - K_k\ H)\ P^-_{k+1}$$

An einem Ausgang $A_{ref}$ des Fusionsbausteins 36 werden der mit dem Algorithmus aktualisierte Wert der Referenzgeschwindigkeitskenngröße $V_{ref}$ und deren aus dem Fehler P ermittelte Varianz $\sigma_{ref}$ bereitgestellt.

Im ersten Betriebsmodus erfolgt die Inertialberechnung wie oben bereits erläutert, indem die Schalteinheit 28 die Referenzgeschwindigkeitskenngröße $V_{ref}$ für die Recheneinheit 24 bereitstellt.

Wie anhand der Figur 3 erläutert wird der Erfassungsvorgang der der Fahrwerkgeschwindigkeitsmessgröße $V_{dreh}$ zugrunde liegenden Messgröße n überwacht. Ein Wechseln in den zweiten Betriebsmodus durch die Erkennung eines anomalen Bereitstellungsvorgangs der Fahrwerkgeschwindigkeitsmessgröße $V_{dreh}$ erfolgt wie oben für das erste Ausführungsbeispiel beschrieben. Dabei wird von der Erkennungseinheit 30 das

Signal $S_{anom}$ erzeugt, durch welches die Schalteinheit 28 zum Schalten in den zweiten Schaltzustand betätigt wird.

Die Ausführung der Inertialberechnung gemäß dem zweiten Betriebsmodus unterscheidet sich vom oben beschriebenen, ersten Ausführungsbeispiel (in welchem der Zustandsbeobachter bzw. zweite Rechenbaustein 24.2 in einem freien Propagationsmodus betrieben wird) dadurch, dass die Schalteinheit 28 die Recheneinheit 24 von der Referenzgeschwindigkeitskenngröße $V_{ref}$ entkoppelt und die globale Geschwindigkeitskenngröße $V_{\Sigma}$ anstatt dieser für die Recheneinheit 24 bereitstellt. Demnach wird die globale Geschwindigkeitskenngröße $V_{\Sigma}$ anstatt der Referenzgeschwindigkeitskenngröße $V_{ref}$ durch den Zustandsbeobachter bzw. zweiten Rechenbaustein 24.2 herangezogen und zur Ermittlung der Kenngrößen $b_{gyro}$, $b_{acc}$ und $\delta v$ mit dem Schätzwert $V'_{DG}$ der Inertialgeschwindigkeitskenngröße $V_{DG}$ verknüpft.

Ist für die Ausführung der Inertialberechnung gemäß dem zweiten Betriebsmodus die globale Geschwindigkeitskenngröße $V_{\Sigma}$ nicht verfügbar, wird das Signal FP vom Fusionsbaustein 32 erzeugt, welches auf den Eingang $E_{FP}$ des zweiten Rechenbausteins 24.2 gegeben wird, und der Zustandsbeobachter wird im freien Propagationsmodus betrieben.

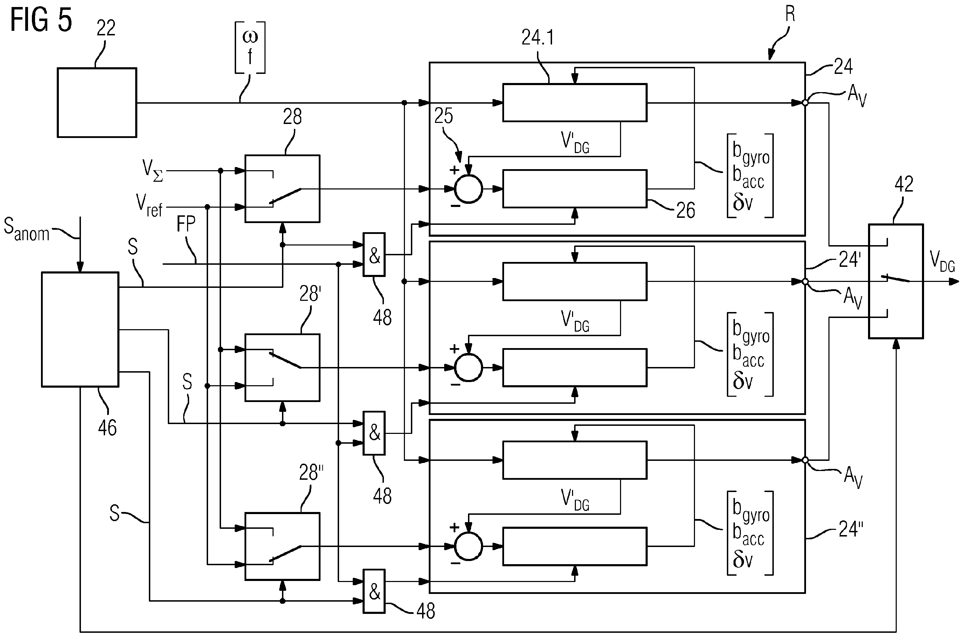

Die obige Beschreibung ist auf die Ausführung der Rechenvorrichtung R mit einer Recheneinheit 24 gerichtet. Im Folgenden wird eine weitere Ausführung beschrieben, in welcher die Rechenvorrichtung R zur Bereitstellung der Inertialgeschwindigkeitskenngröße $V_{DG}$ mehrere Recheneinheiten 24, 24' und 24" aufweist. Diese Ausführung ist in Figur 5 gezeigt.

Die weiteren Recheneinheiten 24' und 24" sind ebenfalls dazu vorgesehen, die Inertialberechnung auf der Basis der gleichen Inertialmessgrößen $\omega^b_{ib}$ und $f^b$ wie für die Recheneinheit 24 gemäß den oben beschrieben Betriebsmodi durchzuführen. Jede Recheneinheit 24, 24', 24" stellt wie oben beschrieben ein Ergebnis der Inertialberechnung an ihrem Ausgang $A_v$ bereit. Den Recheneinheiten 24, 24', 24" ist eine nachgeschaltete Schaltvorrichtung 42 zugeordnet, die zur Bereitstellung der Inertialgeschwindigkeitskenngröße $V_{DG}$ wahlweise mit einem der Ausgänge $A_v$ in Verbindung steht.

Jeder Recheneinheit 24, 24', 24" ist jeweils eine Schalteinheit 28, 28' bzw. 28" vorgeschaltet, deren Funktion weiter oben bereits beschrieben wurde: In einem ersten Schaltzustand stellt die Schalteinheit 28, 28' bzw. 28" die Referenzgeschwindigkeitskenngröße $V_{ref}$ für die jeweilige Recheneinheit 24, 24' bzw. 24" bereit, wenn diese die Inertialberechnung gemäß dem ersten Betriebsmodus durchführt. In einem zweiten Schaltzustand wird die zugeordnete Recheneinheit 24, 24', 24" zur Durchführung des zweiten Betriebsmodus von der Referenzgeschwindigkeitskenngröße $V_{ref}$ entkoppelt. Gemäß der Ausführung der Figur 3 erfolgt mit der Entkopplung ein Auslösen des freien Propagationsmodus des zugeordneten Zustandsbeobachters bzw. zweiten Rechenbausteins 24.2 (in Figur 5 nicht gezeigt), während - in der Ausführung gemäß Figur 4 - die globale Geschwindigkeitskenngröße $V_{\Sigma}$ durch den Zustandsbeobachter anstatt der Referenzgeschwindigkeitskenngröße $V_{ref}$ herangezogen wird.

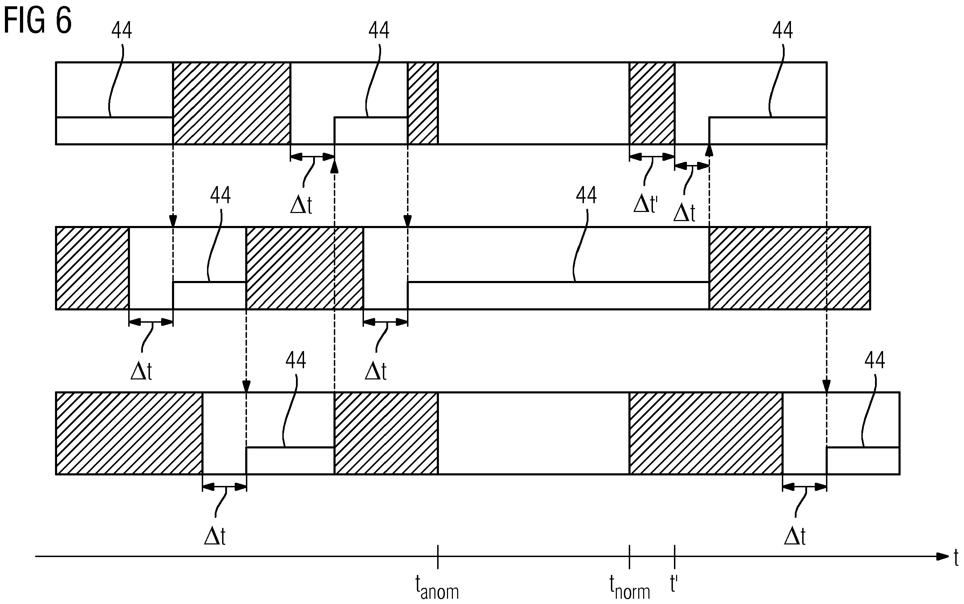

Die Schaltvorrichtung 42 und die Schalteinheiten 28, 28', 28" werden beim Vorliegen eines normalen Bereitstellungsvorgangs der Fahrwerkgeschwindigkeitsmessgröße $V_{dreh}$ gemäß voreingestellten Schaltzyklen getätigt, die aufeinander abgestimmt sind. Diese Schaltzyklen werden anhand der Figur 6 erläutert.

In Figur 6 sind für jede Recheneinheit 24, 24' bzw. 24" die Schaltzyklen der entsprechenden Schalteinheit 28, 28' bzw. 28" durch eine Abwechslung von schraffierten und unschraffierten Bereichen als Funktion der auf der horizontalen Achse aufgetragenen Zeit t dargestellt. Ein schraffierter Bereich entspricht einer Zeitspanne, in welcher die von der zugeordneten Recheneinheit durchgeführte Inertialberechnung gemäß dem ersten Betriebsmodus erfolgt, d.h. die Referenzgeschwindigkeitskenngröße $V_{ref}$ von dieser Recheneinheit für die Schätzung der Abweichung berücksichtigt wird. Während einer durch einen unschraffierten Bereich dargestellten Zeitspanne erfolgt die Inertialberechnung gemäß dem zweiten Betriebsmodus, d.h. ohne Berücksichtigung der Referenzgeschwindigkeitskenngröße $V_{ref}$.

Beim Vorliegen eines normalen Bereitstellungsvorgangs der Fahrwerkgeschwindigkeitsmessgröße $V_{dreh}$ sind die Schaltzyklen der Schalteinheiten 28, 28' und 28" zeitlich derart voneinander versetzt, dass ein Schalten einer Schalteinheit in den zweiten Schaltzustand, d.h. ein Umschalten der zugeordneten Recheneinheit in den zweiten Betriebsmodus, grundsätzlich erfolgen kann, wenn sich eine andere Schalteinheit selbst noch im zweiten Schaltzustand befindet. Anders formuliert besteht grundsätzlich eine zeitliche Überlappung zwischen dem Ende einer Zeitspanne, in welcher sich eine Schalteinheit im zweiten Schaltzustand befindet, und dem Beginn einer weiteren Zeitspanne, in welcher sich eine andere Schalteinheit im zweiten Schaltzustand befindet. Dies ist durch ein Überlappen zwischen dem Ende eines unschraffierten Bereichs für eine erste Recheneinheit und dem Anfang eines unschraffierten Bereichs für eine zweite Recheneinheit widergespiegelt.

Der Schaltzyklus der den Recheneinheiten 24, 24' und 24" nachgeschalteten Schaltvorrichtung 42 ist mittels einer fett dargestellten Linie 44 gezeigt. Die sukzessiven Schaltvorgänge der Schaltvorrichtung 42 werden durch Übergange der Linie 44 zwischen den verschiedenen Zeilen des Diagramms dargestellt. Beispielsweise stellt die im ersten unschraffierten Bereich der der Recheneinheit 24 zugeordneten ersten Zeile vorhandene Linie 44 die Situation dar, in welcher die Schaltvorrichtung 42 eine Verbindung mit dem Ausgang $A_v$ dieser Recheneinheit 24 herstellt, d.h. die Fahrgeschwindigkeitskenngröße $V_{DG}$ von dieser Recheneinheit 24 bereitgestellt wird. Der Übergang der Linie 44 in die zweite Zeile entspricht einem Umschalten der Schaltvorrichtung 42, welche eine aktive Verbindung mit dem Ausgang $A_v$

der zweiten Recheneinheit 24' herstellt.

Dem Diagramm ist zu entnehmen, dass die Schaltvorrichtung 42 bei jedem Schaltvorgang (d.h. Zeilenübergang im Diagramm) eine aktive Verbindung mit einer Recheneinheit herstellt, welche die Inertialberechnung gemäß dem zweiten Betriebsmodus durchführt. Insbesondere sind die Schaltzyklen der Schalteinheiten 28, 28', 28" und der Schaltvorrichtung 42 derart aufeinander abgestimmt, dass die Schaltvorrichtung 42 bei jedem Schaltvorgang eine aktive Verbindung mit einer Recheneinheit herstellt, welche die Inertialberechnung gemäß dem zweiten Betriebsmodus seit zumindest einer vorbestimmten Zeit $\Delta t$ durchführt. Dies ist durch die oben beschriebenen Überlappungen zwischen den unschraffierten Bereichen ermöglicht.

Die Schaltvorgänge der Schalteinheiten 28, 28', 28" und der Schaltvorrichtung 42 werden durch eine Steuereinheit 46 gesteuert (siehe Figur 5), in welcher die oben beschriebenen Schaltzyklen programmiert sind.

Die obige Beschreibung bezüglich der Schaltzyklen betrifft den Fall eines normalen Bereitstellungsvorgangs. Wird von der Erkennungseinheit 30 ein anomaler Bereitstellungsvorgang der Fahrwerkgeschwindigkeitsmessgröße $V_{dreh}$ erkannt, wird das Signal $S_{anom}$ von der Steuereinheit 46 empfangen, welche Schalteinheiten 28 in den zweiten Schaltzustand umschaltet bzw. den bereits vorliegenden zweiten Schaltzustand von Schalteinheiten 28 aufrechthält, damit alle Recheneinheiten 24, 24', 24" von der Referenzgeschwindigkeitskenngröße $V_{ref}$ entkoppelt sind. Dies ist im Diagramm der Figur 6 zu einem Zeitpunkt $t_{anom}$ dargestellt. Anschließend werden alle Recheneinheiten 24, 24', 24" im zweiten Betriebsmodus betrieben und der Schaltzyklus der Schaltvorrichtung 42 wird angehalten.

Zu einem Zeitpunkt $t_{norm}$, zu welchem ein Beenden des anomalen Bereitstellungsvorgangs durch die Erkennungseinheit 30 erfasst wird, werden zwei der drei Recheneinheiten 24, 24', 24" im ersten Betriebsmodus betrieben. Dabei handelt es sich um die Recheneinheiten, mit welchen die Schaltvorrichtung 42 während der Zeitspanne $[t_{anom}, t_{norm}]$ nicht aktiv verbunden war. Die Schaltvorrichtung 42 verbleibt nach dem Zeitpunkt $t_{norm}$ weiterhin von diesen Recheneinheiten getrennt. Dabei wird die dritte Recheneinheit, mit welcher die Schaltvorrichtung 42 aktiv verbunden verbleibt, weiterhin im zweiten Betriebsmodus betrieben. Zu einem Zeitpunkt t' nach Ablauf einer Zeit $\Delta t'$ nach dem Zeitpunkt $t_{norm}$ erfolgt für eine der Recheneinheiten, die sich im ersten Betriebsmodus befindet, einen Wechsel in den zweiten Betriebsmodus. Nach Ablauf der Zeitspanne $\Delta t$ wird die Schaltvorrichtung 42 mit dieser Recheneinheit aktiv verbunden und der oben beschriebene Schaltbetrieb mit turnusmäßigen Schaltvorgängen wird wieder aufgenommen.

Bei einer Ausführung des zweiten Betriebsmodus gemäß Figur 4, bei dem die globale Geschwindigkeitskenngröße $V_\Sigma$ anstatt der Referenzgeschwindigkeitskenngröße $V_{ref}$ herangezogen wird, ist eine Maßnahme für den Fall vorgesehen, dass die globale

Geschwindigkeitskenngröße $V_\Sigma$ nicht verfügbar ist. Hierbei ist jeder Recheneinheit 24, 24' bzw. 24" jeweils ein UND-Glied 48 vorgeschaltet, welches mit einem von der Steuereinheit 46 erzeugten Steuersignal S zur Steuerung der entsprechenden Schalteinheit 28, 28' bzw. 28" einerseits und mit dem Signal FP beaufschlagt wird, welches die Nicht-Verfügbarkeit der globalen Geschwindigkeitskenngröße $V_\Sigma$ darstellt (siehe Figur 4). Ist diese nicht verfügbar (wobei ein Signal FP erzeugt wird) und entspricht das Steuersignal S einem Schalten der entsprechenden Schalteinheit 28, 28', 28" in den zweiten Schaltzustand (Entkoppeln der Referenzgeschwindigkeitskenngröße $V_{ref}$) wird - durch Auslösen eines Signals durch das UND-Glied 48 - der Rechenbaustein 24.2 der entsprechenden Recheneinheit 24, 24' bzw. 24" in einem freien Propagationsmodus betrieben. Dies entspricht einer Ausführung des zweiten Betriebsmodus gemäß der Ausführung in Figur 3.

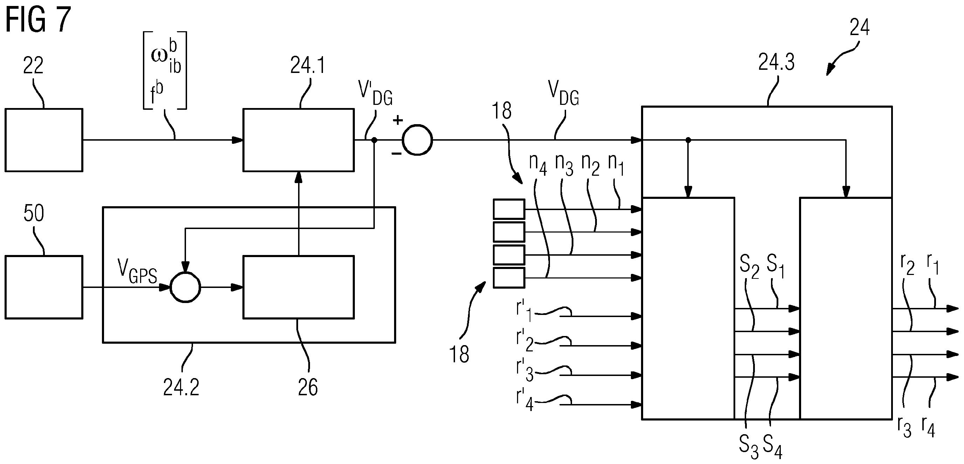

Es wird nun ein weiteres Ausführungsbeispiel anhand der Figur 7 erläutert. Dieses unterscheidet sich vom Ausführungsbeispiel der Figur 4 insbesondere durch die Bereitstellung einer globalen Geschwindigkeitskenngröße und die Anordnung eines weiteren Rechenbausteins 24.3 der Recheneinheit 24, welcher zur Ausführung eines Raddurchmesserbestimmungsmodus vorgesehen ist. Außerdem wird angenommen, dass die Sensoreinheiten 18 der Fahrwerkeinheiten 14 in Figur 1 jeweils zwei Sensoren aufweisen, die jeweils einem unterschiedlichen Radsatz 16 der entsprechenden Fahrwerkeinheit 14 zugeordnet sind. Es werden demnach vier Messgrößen $n_1$ bis $n_4$ von den Sensoreinheiten 18 erfasst. Auf der Grundlage dieser Messgrößen $n_1$ bis $n_4$ wird für jeden dieser Radsätze 16 eine Raddurchmesserkenngröße $r_1$, $r_2$, $r_3$ bzw. $r_4$ ermittelt. In der betrachteten Ausführung sind die Messgrößen $n_1$ bis $n_4$ jeweils als Drehzahl ausgebildet.

Einer Raddurchmesserbestimmung im Raddurchmesserbestimmungsmodus kann von einer Rechenvorrichtung R durchgeführt werden, die einer der Inertialmesseinheiten 22 des Schienenfahrzeugs 10 zugeordnet ist. Dieser Bestimmung liegt eine Ausführung der Inertialberechnung mittels der Rechenbausteine 24.1 und 24.2 gemäß dem zweiten Betriebsmodus zugrunde, wobei eine globale Geschwindigkeitskenngröße $V_{GPS}$ durch den zweiten Rechenbaustein 24.2 bzw. Zustandsbeobachter herangezogen wird. Diese wird mittels einer Erfassungsvorrichtung 50 des Schienenfahrzeugs 10 (siehe auch Figur 1) bereitgestellt, die insbesondere eine Positionserfassungsvorrichtung aufweist. Diese dient dazu, eine Positionskenngröße für die Position des Schienenfahrzeugs 10 durch Erfassung von Signalen eines Ortungssystems, beispielsweise eines satellitengestützten Ortungssystems, zu erfassen. Die Erfassungsvorrichtung 50 stellt die auf das gesamte Schienenfahrzeug 10 bezogene globale Geschwindigkeitskenngröße $V_{GPS}$ auf der Basis von erfassten Positionskenngrößen bereit.

Die mittels der im zweiten Betriebsmodus durchgeführten Inertialberechnung ermittelten Inertialgeschwindigkeitskenngröße $V_{DG}$ wird zur Durchführung des Raddurchmesserbestimmungsmodus von dem Rechenbaustein 24.3 herangezogen. Zusätzlich werden die von den Sensoreinheiten 18 erfassten Messgrößen $n_1$ bis $n_4$ sowie vorläufige Raddurchmesserkenngrößen $r'_1$ bis $r'_4$, die aus einer Speichereinheit (nicht gezeigt) herausgelesen werden, vom Rechenbaustein 24.3 berücksichtigt. Die Bereitstellung dieser vorläufigen Raddurchmesserkenngrößen $r'_1$ bis $r'_4$ wird weiter unten erläutert.

Ein erstes Modul des Rechenbausteins 24.3 berechnet auf der Basis dieser Kenngrößen eine Kenngröße $s_i$, welche ein Indikator für einen anomalen Erfassungsvorgang der Messgrößen $n_i$, z.B. für eine Schlupferkennung ist:

$$s_i = (n_i \; 2\pi \; r'_i - V_{DG}) \; / \; V_{DG}$$

Liegt ein normaler Erfassungsvorgang für den der Messgröße $n_i$ entsprechenden Radsatz 16 vor, wird durch ein zweites Modul des Rechenbausteins 24.3 die diesem Radsatz 16 zugeordnete Raddurchmesserkenngröße $r_i$ aktualisiert:

$$r_i = V_{DG} \; / \; 2\pi \; n_i$$

Nachdem die Raddurchmesserkenngrößen $r_i$ bereitgestellt und in einer Speichereinheit gespeichert wurden, wird die Inertialberechnung für jede Fahrwerkeinheit 14 gemäß dem ersten Betriebsmodus durchgeführt. Hierbei wird wie oben erörtert eine Referenzgeschwindigkeitskenngröße $V_{ref}$ durch den zweiten Rechenbaustein 24.2 herangezogen, die das Ergebnis einer Fusion der Fahrwerkgeschwindigkeitsmessgröße $V_{dreh}$ mit der globalen Geschwindigkeitskenngröße $V_{GPS}$ wie anhand der Figur 4 oben erläutert ist.

Wie oben anhand der Figur 3 bereits erläutert wird aus den durch die Sensoreinheiten 18 erfassten Messgrößen $n_i$ die entsprechende Fahrwerkgeschwindigkeitsmessgröße $V_{dreh}$ durch ein Einbeziehen der entsprechenden Raddurchmesserkenngröße $r_i$ bereitgestellt. Hierbei werden diese im Raddurchmesserbestimmungsmodus ermittelten Raddurchmesserkenngrößen $r_i$ aus einer Speichereinheit herausgelesen und mit den Messgrößen $n_i$ kombiniert.

Die Bereitstellung der Referenzgeschwindigkeit $V_{ref}$ auf der Basis der Fahrwerkgeschwindigkeitsmessgröße $V_{dreh}$, die Erkennung eines anomalen Bereitstellungsvorgangs der Fahrwerkgeschwindigkeitsmessgröße $V_{dreh}$ durch die Erkennungseinheit 30 und die Durchführung der Inertialberechnung gemäß den Betriebsmodi erfolgen wie oben bereits beschrieben. Während der Bestimmung der Inertialgeschwindigkeitskenngröße $V_{DG}$ erfolgt durch den Rechenbaustein 24.3 eine kontinuierliche Bestimmung der Raddurchmesserkenngrößen $r_i$, solange kein anomaler Bereitstellungsvorgang der Fahrwerkgeschwindigkeitsmessgröße $V_{dreh}$ vorliegt. Für die Ermittlung der Inertialgeschwindigkeitskenngröße $V_{DG}$ werden jedoch weiterhin die im Raddurchmesserbestimmungsmodus ermittelten, gespeicherten Raddurchmesserkenngrößen $r_i$. Aus den kontinuierlich berechneten Raddurchmesserkenngrößen kann eine Langzeitüberwachung von Radsätzen 16 des Schienenfahrzeugs 10 erfolgen. Es kann ein Verschleiß ermittelt und es können Wartungsdaten ausgegeben werden. Außerdem ist vorteilhaft, aus der Entwicklung der Raddurchmesserkenngrößen verschleißintensive Fahrstrecken zu ermitteln. Auf diese Weise können Daten zur Verbesserung von Streckenabschnitten gewonnen werden. Dabei kann ein festgestellter Verschleiß mit Ortungsdaten verglichen werden, sodass eine Zuordnung zu Orten, an denen ein verstärkter Verschleiß auftritt, erfolgen kann.

Der oben beschriebene Raddurchmesserbestimmungsmodus erfolgt in definierten Zeitabständen. Bei einem Wechseln in diesen Modus wird eine Durchführung der Inertialberechnung gemäß dem zweiten Betriebsmodus wie anhand der Figur 7 erläutert veranlasst. Außerdem werden die im kontinuierlichen Bestimmungsmodus vor dem Wechseln zuletzt ermittelten Raddurchmesserkenngrößen $r_i$ als vorläufige Raddurchmesserkenngrößen $r'_i$ gespeichert. Der Raddurchmesserbestimmungsmodus wird dann wie oben beschrieben zur Bereitstellung aktualisierter Raddurchmesserkenngrößen $r_i$ auf der Basis dieser Raddurchmesserkenngrößen $r'_i$ ausgeführt.

Bei einer erstmaligen Ausführung des Raddurchmesserbestimmungsmodus werden als vorläufige Raddurchmesserkenngrößen $r'_i$ vorgespeicherte Defaultwerte herangezogen.

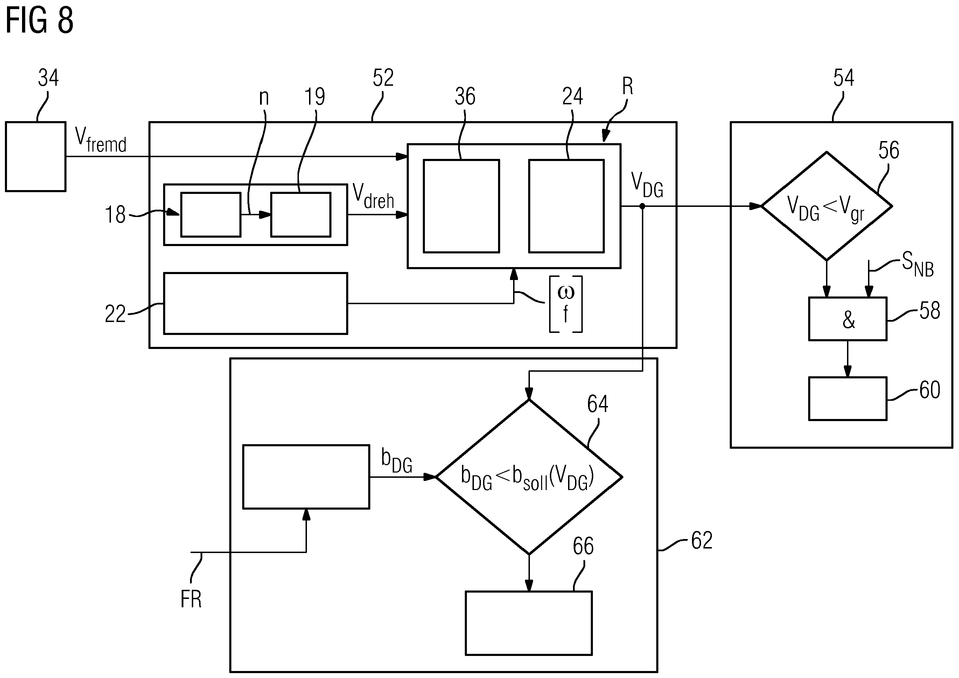

Eine mögliche Auswertung der für eine Fahrwerkeinheit 14 ermittelten Inertialgeschwindigkeitskenngröße $V_{DG}$ ist anhand der Figur 8 erläutert.

In dieser sind insbesondere die einer bestimmten Fahrwerkeinheit 14 zugeordneten Inertialmesseinheit 22, Sensoreinheit 18 und Rechenvorrichtung R dargestellt. Entsprechend den oben beschriebenen Ausführungsbeispielen kann die Rechenvorrichtung R ggf. den Fusionsbaustein 36 aufweisen, welcher die Fahrwerkgeschwindigkeitsmessgröße $V_{dreh}$ der Fahrwerkeinheit 14 mit einer globalen Geschwindigkeitskenngröße, die den oben beschriebenen Kenngrößen $V_\Sigma$ oder $V_{GPS}$ entsprechen kann und als Kenngröße $V_{fremd}$ bezeichnet ist, fusioniert. Die globale Geschwindigkeitskenngröße $V_{fremd}$ wird über den Datenbus 34 bereitgestellt. Die Rechenvorrichtung R kann wie oben ebenfalls beschrieben eine oder mehrere Recheneinheiten 24 aufweisen. Es wird durch zumindest die Sensoreinheit 18, die Inertialmesseinheit 22 und die Rechenvorrichtung R eine Navigationseinheit 52 gebildet, die dem Wagen 12 zugeordnet ist, in welchem sich die betrachtete Fahrwerkeinheit 14 befindet.

Die ermittelte Inertialgeschwindigkeitskenngröße $V_{DG}$ wird in zumindest zweierlei Hinsicht ausgewertet. Ist die betrachtete Fahrwerkeinheit 14 mit einer von einem Antriebsmotor unterschiedlichen Bremseinrichtung, z.B. einer Federspeicherbremse, ausgestattet, kann sie von einem Entscheidungsbaustein 54 einer Bremsregelung des Schienenfahrzeugs 10 herangezogen werden, welche der betrachteten Fahrwerkeinheit 14 zugeordnet ist und entscheidet, ob die Bremseinrichtung zur Bremsung bis zum Stillstand angelegt werden soll. Dies erfolgt mittels eines Komparators 56 und einem UND-Glied 58. Im Komparator 56 wird die Inertialgeschwindigkeitskenngröße $V_{DG}$ mit einem Schwellwert $V_{gr}$ verglichen. Ist sie kleiner als der Schwellwert $V_{gr}$ wird ein aktives Signal auf das UND-Glied 58 gegeben. Ist dieses ebenfalls mit einem Signal $S_{NB}$ beaufschlagt, welches erzeugt wird, falls eine unzureichende Bremsleistung von der von zumindest einem Antriebsmotor der betrachteten Fahrwerkeinheit 14 gebildeten elektrodynamischen Bremse erzeugt wird, wird in einem Schritt 60 entschieden, dass die Federspeicherbremse angelegt wird.

Die Inertialgeschwindigkeitskenngröße $V_{DG}$ kann ferner von einem weiteren Entscheidungsbaustein 62 der Bremsregelung herangezogen werden, welcher entscheidet - bei einem mittels der elektrodynamischen Bremse erfolgenden Bremsvorgang - ob eine Prüfung der Regelung der elektrodynamischen Bremse stattfinden soll. Dies eignet sich insbesondere für eine elektrodynamische Bremse, welche über zumindest zwei Redundanzebenen verfügt. Wird durch die Prüfung ermittelt, dass die Regelung der elektrodynamischen Bremse als fehlerhaft gelten soll, kann ein Wechseln in eine weitere Redundanzebene eingeleitet werden. Der Entscheidungsbaustein 62 weist einen Komparator 64 auf, welcher eine aktuell erfasste Beschleunigungskenngröße $b_{DG}$ der Fahrwerkeinheit 14 mit einem im Bremsvorgang für die aktuelle Inertialgeschwindigkeitskenngröße $V_{DG}$ zumindest zu erfüllenden Sollwert $b_{soll}$ ($V_{DG}$) vergleicht. Die Erfassung der Beschleunigungskenngröße $b_{DG}$ erfolgt auf der Basis der von einem Zugsteuergerät mitgeteilten Fahrtrichtung FR. Ist die erfasste Beschleunigungskenngröße $b_{DG}$ kleiner als der Sollwert $b_{soll}$, wird ein Signal an eine Prüfungsvorrichtung 66 übermittelt, welche die Tauglichkeit der Regelung der elektrodynamischen Bremse prüft. Die Prüfung erfolgt dabei auf der Basis von zumindest zwei weiteren Kriterien, wobei die Prüfungsvorrichtung als sogenannter "2 aus 3 Voter" ausgebildet ist. Diese bewirkt ein Wechseln zwischen zwei Redundanzebenen der Regelung, wenn zumindest zwei der Kriterien erfüllt sind.

## Patentansprüche

1. Verfahren zur Ermittlung zumindest einer Geschwindigkeit bei einem Schienenfahrzeug (10), welches mit zumindest einer ersten Fahrwerkeinheit (14) ausgestattet ist, bei welchem

- wenigstens eine auf die erste Fahrwerkeinheit (14) bezogene Fahrwerkgeschwindigkeitsmessgröße ($V_{dreh}$) mittels zumindest einer der ersten Fahrwerkeinheit (14) zugeordneten Sensoreinheit (18) bereitgestellt wird,

**dadurch gekennzeichnet, dass**

- eine Referenzgeschwindigkeitskenngröße ($V_{ref}$) auf der Basis der Fahrwerkgeschwindigkeitsmessgröße ($V_{dreh}$) gebildet wird,
- Inertialmessgrößen ($\omega^b_{ib}$, $f^b$) von einer Inertialmesseinheit (22) erfasst werden,
- gemäß einem ersten Betriebsmodus eine Inertialgeschwindigkeitskenngröße ($V_{DG}$) mittels einer Inertialberechnung zumindest auf der Basis der Inertialmessgrößen ($\omega^b_{ib}$, $f^b$) und der Referenzgeschwindigkeitskenngröße ($V_{ref}$) zur Schätzung einer Abweichung ($b_{gyro}$, $b_{acc}$, $\delta v$) in der Inertialberechnung ermittelt und mit Hilfe dieser Abweichung korrigiert wird, wobei die Inertialberechnung von zumindest einer Recheneinheit (24; 24', 24") durchgeführt wird,
- gemäß einem zweiten Betriebsmodus die Inertialgeschwindigkeitskenngröße ($V_{DG}$) mittels der Inertialberechnung zumindest auf der Basis der Inertialmessgrößen ($\omega^b_{ib}$, $f^b$) und ohne Berücksichtigung der Referenzgeschwindigkeitskenngröße ($V_{ref}$) ermittelt wird,
- auf der Grundlage eines Vergleichs der im ersten Betriebsmodus ermittelten Inertialgeschwindigkeitskenngröße ($V_{DG}$) und der Fahrwerkgeschwindigkeitsmessgröße ($V_{dreh}$) ein anomaler Bereitstellungsvorgang der Fahrwerkgeschwindigkeitsmessgröße ($V_{dreh}$) durch eine Erkennungseinheit (30) erfasst wird und
- beim Vorliegen eines anomalen Bereitstellungsvorgangs die Inertialberechnung gemäß dem zweiten Betriebsmodus durchgeführt wird.

2. Verfahren nach Anspruch 1,
   **dadurch gekennzeichnet, dass**
   ein erster Rechenbaustein (24.1) der Recheneinheit (24; 24', 24") aus den Inertialmessgrößen ($\omega^b_{ib}$, $f^b$) einen Schätzwert ($V'_{DG}$) der Inertialgeschwindigkeitskenngröße ($V_{DG}$) ermittelt, der im ersten Betriebsmodus zur Schätzung der Abweichung ($b_{gyro}$, $b_{acc}$, $\delta v$) mit der Referenzgeschwindigkeitskenngröße ($V_{ref}$) mittels eines einen Zustandsbeobachter bildenden, zweiten Rechenbausteins (24.2) der Recheneinheit (24; 24', 24") verknüpft wird, wobei die vom zweiten Rechenbaustein (24.2) geschätzte Abweichung ($b_{gyro}$, $b_{acc}$, $\delta v$) vom ersten Rechenbaustein (24.1) herangezogen wird.

3. Verfahren nach Anspruch 1 oder 2,
   **dadurch gekennzeichnet, dass**
   gemäß einer ersten Ausbildung des ersten Betriebsmodus die Referenzgeschwindigkeitskenngröße ($V_{ref}$) dynamisch der Fahrwerkgeschwindigkeitsmessgröße ($V_{dreh}$) entspricht.

4. Verfahren nach Anspruch 2 und 3,
**dadurch gekennzeichnet, dass**
im zweiten Betriebsmodus der Zustandsbeobachter in einem freien Propagationsmodus betrieben wird.

5. Verfahren nach einem der vorhergehenden Ansprüche,
**dadurch gekennzeichnet, dass**
gemäß einer zweiten Ausbildung des ersten Betriebsmodus eine globale Geschwindigkeitskenngröße ($V_{\Sigma}$; $V_{GPS}$) bereitgestellt wird und die Referenzgeschwindigkeitskenngröße ($V_{ref}$) auf der Basis der Fahrwerkgeschwindigkeitsmessgröße ($V_{dreh}$) und der globalen Geschwindigkeitskenngröße ($V_{\Sigma}$; $V_{GPS}$) gebildet wird.

6. Verfahren nach den Ansprüchen 2 und 5,
**dadurch gekennzeichnet, dass**
im zweiten Betriebsmodus, zur Schätzung der Abweichung ($b_{gyro}$, $b_{acc}$, $\delta v$ in der Inertialberechnung, der Schätzwert ($V'_{DG}$) mit der globalen Geschwindigkeitskenngröße ($V_{\Sigma}$; $V_{GPS}$) mittels des zweiten Rechenbausteins (24.2) verknüpft wird, wobei die vom zweiten Rechenbaustein (24.2) geschätzte Abweichung ($b_{gyro}$, $b_{acc}$, $\delta v$) vom ersten Rechenbaustein (24.1) herangezogen wird,
oder der Zustandsbeobachter in einem freien Propagationsmodus betrieben wird.

7. Verfahren nach Anspruch 5 oder 6,
**dadurch gekennzeichnet, dass**
die globale Geschwindigkeitskenngröße ($V_{\Sigma}$) zumindest auf der Basis einer Mittelung von Geschwindigkeitskenngrößen ($V_{DGfremd\_i}$) von mehreren, jeweils von der ersten Fahrwerkeinheit (14) unterschiedlichen Fahrwerkeinheiten bereitgestellt wird.

8. Verfahren nach Anspruch 5 oder 6,
**dadurch gekennzeichnet, dass**
das Schienenfahrzeug (10) eine von der Inertialmesseinheit (22) unterschiedliche, globale Erfassungsvorrichtung (50) aufweist, welche die globale Geschwindigkeitskenngröße ($V_{GPS}$) bereitstellt.

9. Verfahren nach einem der Ansprüche 5 bis 8,
**dadurch gekennzeichnet, dass**
zur Bereitstellung der Referenzgeschwindigkeitskenngröße ($V_{ref}$) die globale Geschwindigkeitskenngröße ($V_{\Sigma}$; $V_{GPS}$) mit der Fahrwerkgeschwindigkeitsmessgröße ($V_{dreh}$) mittels eines auf dem Prinzip der Sensordatenfusion beruhenden Fusionsbausteins (36) verknüpft wird.

10. Verfahren nach einem der vorhergehenden Ansprüche,
**dadurch gekennzeichnet, dass**
der ersten Fahrwerkeinheit (14) mehrere Recheneinheiten (24, 24', 24") zugeordnet sind, wobei jede Recheneinheit die Inertialberechnung jeweils gemäß den Betriebsmodi durchführen kann und ein Ergebnis der Inertialberechnung an einem Ausgang ($A_V$) bereitstellt, und den Recheneinheiten (24, 24', 24") eine Schaltvorrichtung (42) zugeordnet ist, die zur Bereitstellung der Inertialgeschwindigkeitskenngröße ($V_{DG}$) wahlweise mit einem der Ausgänge ($A_V$) in Verbindung steht.

11. Verfahren nach Anspruch 10,
**dadurch gekennzeichnet, dass**
jeder Recheneinheit (24, 24', 24") jeweils eine Schalteinheit (28, 28', 28") vorgeschaltet ist, welche in einem ersten Schaltzustand die Referenzgeschwindigkeitskenngröße ($V_{ref}$) für die jeweilige Recheneinheit (24, 24', 24") zur Durchführung des ersten Betriebsmodus bereitstellt und in einem zweiten Schaltzustand die Recheneinheit (24, 24', 24") zur Durchführung des zweiten Betriebsmodus von der Referenzgeschwindigkeitskenngröße ($V_{ref}$) entkoppelt, wobei beim Nichtvorliegen eines anomalen Erfassungsvorgangs Schaltzyklen der Schalteinheiten (28, 28', 28") und ein Schaltzyklus der Schaltvorrichtung (42) derart aufeinander abgestimmt sind, dass die Schaltvorrichtung (42) bei jedem Schaltvorgang eine Verbindung mit einer Recheneinheit (24, 24', 24") herstellt, welche die Inertialberechnung gemäß dem zweiten Betriebsmodus durchführt, und beim Vorliegen eines anomalen Erfassungsvorgangs alle Schalteinheiten (28, 28', 28") im zweiten Schaltzustand geschaltet sind.

12. Verfahren nach Anspruch 6 und nach Anspruch 11,
**dadurch gekennzeichnet, dass**
die Schalteinheiten (28, 28', 28") in deren zweitem Schaltzustand die globale Geschwindigkeitskenngröße ($V_{\Sigma}$) für die jeweilige Recheneinheit (24, 24', 24") zur Durchführung des zweiten Betriebsmodus bereitstellen.

13. Verfahren nach Anspruch 11 oder 12,
**dadurch gekennzeichnet, dass**
beim Nichtvorliegen eines anomalen Erfassungsvorgangs die Schaltzyklen der Schalteinheiten (28, 28', 28") und der Schaltzyklus der Schaltvorrichtung (42) derart aufeinander abgestimmt sind, dass die Schaltvorrichtung (42) bei jedem Schaltvorgang eine Verbindung mit einer der Recheneinheiten (24, 24', 24") herstellt, welche die Inertialberechnung seit zumindest einer vorbestimmten Zeit ($\Delta t$) gemäß dem zweiten Betriebsmodus durchführt.

14. Verfahren nach den Ansprüchen 6 und 8,
**dadurch gekennzeichnet, dass**

in einem Raddurchmesserbestimmungsmodus die Inertialberechnung gemäß dem zweiten Betriebsmodus zur Ermittlung der Inertialgeschwindigkeitskenngröße ($\mathbf{V}_{DG}$) durchgeführt wird und zumindest eine Raddurchmesserkenngröße ($r_1$, $r_2$) der Fahrwerkeinheit (14) zumindest auf der Grundlage der ermittelten Inertialgeschwindigkeitskenngröße ($\mathbf{V}_{DG}$) ermittelt wird.

15. Verfahren nach Anspruch 14,
**dadurch gekennzeichnet, dass**
in einer dem Raddurchmesserbestimmungsmodus folgenden Durchführung der Inertialberechnung gemäß dem ersten Betriebsmodus die im Raddurchmesserbestimmungsmodus ermittelte Raddurchmesserkenngröße ($r_1$, $r_2$) bei der Bereitstellung der Fahrwerkgeschwindigkeitsmessgröße ($\mathbf{V}_{dreh}$) einbezogen wird.

**Claims**

1. Method for determining at least one speed in a rail vehicle (10) equipped with at least one first chassis unit (14), in which

   - at least one chassis speed measurement variable ($V_{dreh}$) based on the first chassis unit (14) is provided by means of at least one sensor unit (18) assigned to the first chassis unit (14),
   **characterized in that**

   - a reference speed characteristic variable ($V_{ref}$) is formed on the basis of the chassis speed measurement variable ($V_{dreh}$),
   - inertial measurement variables ($\omega^b_{ib}$, $f^b$) are recorded by an inertial measuring unit (22),
   - according to a first operating mode, an inertial speed characteristic variable ($V_{DG}$) is determined by means of an inertial calculation at least on the basis of the inertial measurement variables ($\omega b_{ib}$, $f^b$) and the reference speed characteristic variable ($V_{ref}$) in order to estimate a deviation ($b_{gyro}$, $b_{acc}$, $\delta v$) in the inertial calculation, and is corrected with the aid of this deviation, wherein the inertial calculation is carried out by at least one computing unit (24; 24', 24"),
   - according to a second operating mode, the inertial speed characteristic variable ($V_{DG}$) is determined, by means of the inertial calculation, at least on the basis of the inertial measurement variables ($\omega^b_{ib}$, $f^b$) and without taking into account the reference speed characteristic variable ($V_{ref}$),
   - an abnormal process of providing the chassis speed measurement variable

($V_{dreh}$) is detected by a detection unit (30) on the basis of a comparison of the inertial speed characteristic variable ($V_{DG}$) determined in the first operating mode and the chassis speed measurement variable ($V_{dreh}$), and
   - the inertial calculation is carried out according to the second operating mode if an abnormal provision process is present.

2. Method according to Claim 1,
**characterized in that**
a first computing component (24.1) of the computing unit (24; 24', 24") determines an estimated value ($V'_{DG}$) of the inertial speed characteristic variable ($V_{DG}$) from the inertial measurement variables ($\omega^b_{ib}$, $f^b$), which estimated value is linked, in the first operating mode, to the reference speed characteristic variable ($V_{ref}$) for the purpose of estimating the deviation ($b_{gyro}$, $b_{acc}$, $\delta v$) by means of a second computing component (24.2) of the computing unit (24; 24', 24") which forms a state observer, the deviation ($b_{gyro}$, $b_{acc}$, $\delta v$) estimated by the second computing component (24.2) being used by the first computing component (24.1).

3. Method according to Claim 1 or 2,
**characterized in that**
according to a first embodiment of the first operating mode, the reference speed characteristic variable ($V_{ref}$) dynamically corresponds to the chassis speed measurement variable ($V_{dreh}$).

4. Method according to Claims 2 and 3,
**characterized in that**
the state observer is operated in a free propagation mode in the second operating mode.

5. Method according to one of the preceding claims,
**characterized in that**
according to a second embodiment of the first operating mode, a global speed characteristic variable ($V_\Sigma$; $V_{GPS}$) is provided and the reference speed characteristic variable ($V_{ref}$) is formed on the basis of the chassis speed measurement variable ($V_{dreh}$) and the global speed characteristic variable ($V_\Sigma$; $V_{GPS}$).

6. Method according to Claims 2 and 5,
**characterized in that**
in the second operating mode, the estimated value ($V'_{DG}$) is linked to the global speed characteristic variable ($V_\Sigma$; $V_{GPS}$) by means of the second computing component (24.2) in order to estimate the deviation ($b_{gyro}$, $b_{acc}$, $\delta v$) in the inertial calculation, the deviation ($b_{gyro}$, $b_{acc}$, $\delta v$) estimated by the second computing component (24.2) being used by the first computing component (24.1) or the state observer being operated in a free propagation mode.

**7.** Method according to Claim 5 or 6, **characterized in that** the global speed characteristic variable ($V_\Sigma$) is provided at least on the basis of an averaging of speed characteristic variables ($V_{DGfremd\_i}$) of a plurality of chassis units each different from the first chassis unit (14).

**8.** Method according to Claim 5 or 6, **characterized in that** the rail vehicle (10) has a global recording apparatus (50) which is different from the inertial measuring unit (22) and provides the global speed characteristic variable ($V_{GPS}$).

**9.** Method according to one of Claims 5 to 8, **characterized in that** in order to provide the reference speed characteristic variable ($V_{ref}$), the global speed characteristic variable ($V_\Sigma$; $V_{GPS}$) is linked to the chassis speed measurement variable ($V_{dreh}$) by means of a merging module (36) based on the principle of sensor data merging.

**10.** Method according to one of the preceding claims, **characterized in that** a plurality of computing units (24, 24', 24") are assigned to the first chassis unit (14), each computing unit being able to respectively carry out the inertial calculation according to the operating modes and providing a result of the inertial calculation at an output ($A_V$), and a switching apparatus (42) is assigned to the computing units (24, 24', 24"), which switching apparatus is selectively connected to one of the outputs ($A_V$) in order to provide the inertial speed characteristic variable ($V_{DG}$).

**11.** Method according to Claim 10, **characterized in that** a switching unit (28, 28', 28") is respectively connected upstream of each computing unit (24, 24', 24") and, in a first switching state, provides the reference speed characteristic variable ($V_{ref}$) for the respective computing unit (24, 24', 24") for carrying out the first operating mode and, in a second switching state, decouples the computing unit (24, 24', 24") from the reference speed characteristic variable ($V_{ref}$) in order to carry out the second operating mode, in which case, if an abnormal recording process is not present, switching cycles of the switching units (28, 28', 28") and a switching cycle of the switching apparatus (42) are matched to one another in such a manner that the switching apparatus (42), during each switching process, establishes a connection to a computing unit (24, 24', 24") which carries out the inertial calculation according to the second operating mode, and, if an abnormal recording process is present, all switching units (28, 28', 28") are switched in the second switching state.

**12.** Method according to Claims 6 and 11, **characterized in that** the switching units (28, 28', 28") provide, in their second switching state, the global speed characteristic variable ($V_\Sigma$) for the respective computing unit (24, 24', 24") for carrying out the second operating mode.

**13.** Method according to Claim 11 or 12, **characterized in that** if an abnormal recording process is not present, the switching cycles of the switching units (28, 28', 28") and the switching cycle of the switching apparatus (42) are matched to one another in such a manner that the switching apparatus (42), during each switching process, establishes a connection to one of the computing units (24, 24', 24") which has been carrying out the inertial calculation according to the second operating mode at least for a predetermined time ($\Delta t$).

**14.** Method according to Claims 6 and 8, **characterized in that** in a wheel diameter determination mode, the inertial calculation is carried out according to the second operating mode for the purpose of determining the inertial speed characteristic variable ($V_{DG}$), and at least one wheel diameter characteristic variable ($r_1$, $r_2$) of the chassis unit (14) is determined at least on the basis of the inertial speed characteristic variable ($V_{DG}$) determined.

**15.** Method according to Claim 14, **characterized in that** during performance of the inertial calculation according to the first operating mode after the wheel diameter determination mode, the wheel diameter characteristic variable ($r_1$, $r_2$) determined in the wheel diameter determination mode is included in the provision of the chassis speed measurement variable ($V_{dreh}$).

**Revendications**

**1.** Procédé de détermination d'au moins une vitesse pour un véhicule (10) ferroviaire, équipé d'au moins un premier groupe (14) de train de roulement, dans lequel

   - au moyen d'au moins une unité (18) de capteur, associée au premier groupe (14) de train de roulement, on met à disposition au moins une grandeur ($V_{dreh}$) de mesure de vitesse de train de roulement, rapportée au premier groupe (14) de train de roulement,

**caractérisé en ce que**

- on forme une grandeur ($V_{ref}$) caractéristique de vitesse de référence, sur la base de la grandeur ($V_{dreh}$) de mesure de vitesse du train de roulement,
- on détecte des grandeurs ($\omega^b_{ib}$, $f^b$) de mesure de l'inertie par une unité (22) de mesure de l'inertie
- suivant un premier mode de fonctionnement, on détermine, pour l'estimation d'un écart ($b_{gyro}$, $b_{acc}$, $\delta v$), dans le calcul de l'inertie, une grandeur ($V_{DG}$) caractéristique de la vitesse d'inertie, au moyen d'un calcul de l'inertie, sur la base des grandeurs ($\omega^b_{ib}$, $f^b$) de mesure de l'inertie et de la grandeur ($V_{ref}$) caractéristique de vitesse de référence et on la corrige à l'aide de cet écart, le calcul de l'inertie étant effectué par au moins une unité (24 ; 24', 24") d'ordinateur,
- suivant un deuxième mode de fonctionnement, on détermine la grandeur ($V_{DG}$) caractéristique de vitesse d'inertie, au moyen du calcul de l'inertie, au moins sur la base des grandeurs ($\omega^b_{ib}$, $f^b$) de mesure de l'inertie et sans tenir compte de la grandeur ($V_{ref}$) caractéristique de vitesse de référence,
- sur la base d'une comparaison entre la première grandeur ($V_{DG}$) caractéristique de vitesse d'inertie et la grandeur ($V_{dreh}$) de mesure de la vitesse de train de roulement, on détecte, par une unité (30) de reconnaissance, une opération anormale de mise à disposition de la grandeur ($V_{dreh}$) de mesure de la vitesse de train de roulement et
- en présence d'une opération anormale de mise à disposition, on effectue le calcul de l'inertie suivant le deuxième mode de fonctionnement.

2. Procédé suivant la revendication 1,
   **caractérisé en ce qu'**
   un premier module (24.1) d'ordinateur de l'unité (24 ; 24', 24") d'ordinateur détermine, à partir des grandeurs ($\omega^b_{ib}$, $f^b$) de mesure de l'inertie, une valeur ($V'_{DG}$) estimative de la grandeur ($V_{DG}$) caractéristique de vitesse d'inertie, que, dans le premier mode de fonctionnement, on combine, pour l'estimation de l'écart ($b_{gyro}$, $b_{acc}$, $\delta v$), à la grandeur ($V_{ref}$) caractéristique de vitesse de référence, au moyen d'un deuxième module (24.2) d'ordinateur, formant un observateur d'état, de l'unité (24 ; 24', 24") d'ordinateur, l'écart ($b_{gyro}$, $b_{acc}$, $\delta v$) estimé par le deuxième module (24.2) d'ordinateur étant mis à profit par le premier module (24.1) d'ordinateur.

3. Procédé suivant la revendication 1 ou 2,
   **caractérisé en ce que**,
   suivant un premier mode de réalisation du premier mode de fonctionnement, la grandeur ($V_{ref}$) caractéristique de vitesse de référence correspond dynamiquement à la grandeur ($V_{dreh}$) de mesure de vitesse de train de roulement.

4. Procédé suivant la revendication 2 et la revendication 3,
   **caractérisé en ce que**,
   dans le deuxième mode de fonctionnement, on fait fonctionner l'observateur d'état dans un mode de propagation libre.

5. Procédé suivant l'une des revendications précédentes,
   **caractérisé en ce que**
   suivant un deuxième mode de réalisation du premier mode de fonctionnement, on met à disposition une grandeur ($V_{\sum}$ ; $V_{GPS}$) de vitesse globale et on forme la grandeur ($V_{ref}$) caractéristique de vitesse de référence sur la base de la grandeur ($V_{dreh}$) de mesure de la vitesse de train de roulement et de la grandeur ($V_{\sum}$; $V_{GPS}$) caractéristique de vitesse globale.

6. Procédé suivant les revendication 2 et 5,
   **caractérisé en ce que**
   dans le deuxième mode de fonctionnement, pour évaluer l'écart ($b_{gyro}$, $b_{acc}$, $\delta v$) dans le calcul de l'inertie, on combine la valeur ($V'_{DG}$) estimative à la grandeur ($V_{\sum}$; $V_{GPS}$) caractéristique de vitesse globale, au moyen du deuxième module (24.2) d'ordinateur, l'écart ($b_{gyro}$, $b_{acc}$, $\delta v$), estimé par le deuxième module (24.2) d'ordinateur, étant mis à profit par le premier module (24.1) d'ordinateur, ou on fait fonctionner l'observateur d'état dans un mode de propagation libre.

7. Procédé suivant la revendication 5 ou 6,
   **caractérisé en ce que**
   l'on met à disposition la grandeur ($V_{\sum}$) caractéristique de vitesse globale, au moins sur la base d'une moyenne de grandeurs ($V_{DGfremd\_i}$) caractéristiques de vitesse de plusieurs groupes de train de roulement différents du premier groupe (14) de train de roulement.

8. Procédé suivant la revendication 5 ou 6,
   **caractérisé en ce que**
   le véhicule (10) ferroviaire a une unité (22) de mesure d'inertie, différente du dispositif (50) de détection globale, qui met à disposition la grandeur ($V_{GPS}$) caractéristique de vitesse globale.

9. Procédé suivant l'une des revendications 5 à 8,
   **caractérisé en ce que**,
   pour mettre à disposition la grandeur ($V_{ref}$) caractéristique de vitesse de référence, on combine la grandeur ($V_{\sum}$ ; $V_{GPS}$) caractéristique de vitesse globale à la grandeur ($V_{dreh}$) de mesure de la vitesse de train de roulement, au moyen d'un module (36) de fusion reposant sur le principe de la fusion de données de capteur.

**10.** Procédé suivant l'une des revendications précédentes,
**caractérisé en ce qu'**
il est associé, au premier groupe (14) de train de roulement, plusieurs unités (24 ; 24', 24") d'ordinateur, chaque unité d'ordinateur pouvant effectuer le calcul d'inertie respectivement suivant les modes de fonctionnement et mettant à disposition un résultat du calcul de l'inertie à une sortie ($A_V$), et il est associé, aux unités (24 ; 24', 24") d'ordinateur, un dispositif (42) de commutation, qui est en liaison, au choix, avec l'une des sorties ($A_V$) pour mettre à disposition la grandeur ($V_{DG}$) caractéristique de vitesse d'inertie.

**11.** Procédé suivant la revendication 10,
**caractérisé en ce que**
il est monté, avant chaque unité (24; 24', 24") d'ordinateur, respectivement une unité (28, 28', 28") de commutation, qui, dans un premier état de commutation, met, pour effectuer le premier mode de fonctionnement, à disposition la grandeur ($V_{ref}$) caractéristique de vitesse de référence de l'unité (24; 24', 24") d'ordinateur respective et, dans un deuxième état de commutation, découple l'unité (24; 24', 24") d'ordinateur, pour effectuer le deuxième mode de fonctionnement, de la grandeur ($V_{ref}$) caractéristique de vitesse de référence, dans lequel, s'il n'y a pas une opération de détection anormale, des cycles de commutation des unités (28, 28', 28") de commutation et un cycle de commutation du dispositif (42) de commutation sont accordés les uns à l'autre, de manière à ce que le dispositif (42) de commutation ménage, à chaque opération de commutation, une liaison à une unité (24; 24', 24") d'ordinateur, qui effectue le calcul de l'inertie suivant le deuxième mode de fonctionnement et, en présence d'une opération de détection anormale, toutes les unités (28, 28', 28") de commutation sont mises dans le deuxième état de commutation.

**12.** Procédé suivant la revendication 6 et suivant la revendication 11,
**caractérisé en ce que**
les unités (28, 28', 28") de commutation mettent, pour effectuer le deuxième mode de commutation, dans leur deuxième état de commutation, la grandeur ($V_\Sigma$) caractéristique de la vitesse globale à disposition de l'unité (24; 24', 24") d'ordinateur respective.

**13.** Procédé suivant la revendication 11 ou 12,
**caractérisé en ce que**,
s'il n'y a pas une opération de détection anormale, des cycles de commutation des unités (28, 28', 28") de commutation et le cycle de commutation du dispositif (42) de commutation sont accordés les uns à l'autre, de manière à ce que le dispositif (42) de commutation ménage, à chaque opération de commutation, une liaison avec l'une des unités (24 ; 24', 24") d'ordinateur, qui effectue, suivant le deuxième mode de fonctionnement, le calcul de l'inertie, au moins depuis un temps ($\Delta t$) déterminé à l'avance.

**14.** Procédé suivant les revendications 6 et 8,
**caractérisé en ce que**
dans un module de détermination du diamètre d'une roue, on effectue, pour déterminer la grandeur ($V_{DG}$) caractéristique de vitesse d'inertie, le calcul de l'inertie suivant le deuxième mode de fonctionnement, et on détermine au moins une grandeur ($r_1$, $r_2$) caractéristique du diamètre d'une roue du groupe (14) de train de roulement, au moins sur la base de la grandeur ($V_{DG}$) caractéristique de vitesse d'inertie, qui a été déterminée.

**15.** Procédé suivant la revendication 14,
**caractérisé en ce que**
dans un calcul de l'inertie suivant le premier mode de fonctionnement, suivant le mode de détermination du diamètre d'une roue, on incorpore la grandeur ($r_1$, $r_2$) caractéristique du diamètre d'une roue déterminée dans le mode de détermination du diamètre d'une roue, lors de la mise à disposition de la grandeur ($V_{dreh}$) de mesure de la vitesse de train de roulement.

FIG 1

EP 2 981 832 B1

FIG 2

EP 2 981 832 B1

# FIG 3

19 ⌐ | r |  $V_{dreh} = V_{ref}$  29

20 ⌐ 18 ⌐ [ ] ↑ n

$S_{anom}$

30

$V_{DG}$

FIG 4

EP 2 981 832 B1

FIG 5

EP 2 981 832 B1

FIG 6

$t_{anom}$  $t_{norm}$  $t'$  $t$

FIG 7

# FIG 8

**EP 2 981 832 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008071498 A